# EUROPEAN PATENT APPLICATION

(11) **EP 4 474 966 A1**
(43) Date of publication of application: **11.12.2024**
(21) Application number: 23795323.7
(22) Date of filing: 24.04.2023
(51) Int. Cl.: G06F 3/04842

(54) **INTERFACE DISPLAY METHOD AND ELECTRONIC DEVICE**

(30) Priority: 29.04.2022 CN 202210464499
(71) Applicant: Huawei Technologies Co., Ltd., Shenzhen, Guangdong 518129 (CN)
(72) Inventor: TAO, Qiang, Shenzhen, Guangdong 518129 (CN); GAO, Guangyuan, Shenzhen, Guangdong 518129 (CN)
(74) Representative: MERH-IP Matias Erny Reichl Hoffmann Patentanwälte PartG mbB
(86) International application number: PCT/CN2023/090237
(87) International publication number: WO 2023/207890

(57) **Abstract**

This application provides an interface display method and an electronic device. The method includes: The electronic device displays a first search interface. The electronic device receives a first keyword entered by a user on the first search interface. The electronic device displays a first interface, where the first interface includes first content related to the first keyword, and the first interface is an interface of a first application or a first service. The electronic device receives a first operation performed by the user on the first interface. The electronic device displays a second interface of a second application in response to the first operation, where the second interface includes second content and one or more function controls, and the second content is related to the first content. According to the method, before the electronic device displays an interface of the second application, the electronic device can first display, by using the first application or the first service, an interface searched for by the user, to preview the interface associated with the entered keyword without downloading the second application.

## Description

This application claims priority to Chinese Patent Application No. 202210464499.6, filed with the China National Intellectual Property Administration on April 29, 2022 and entitled "INTERFACE DISPLAY METHOD AND ELECTRONIC DEVICE", which is incorporated herein by reference in its entirety.

### TECHNICAL FIELD

This application relates to the field of terminal technologies, and in particular, to an interface display method and an electronic device.

### BACKGROUND

Currently, a user may search an application store for a corresponding application based on a name of the application and install the application. Then, an electronic device may receive a user operation to start the application, for searching for and viewing a corresponding functional interface in the application. However, the user can view the functional interface in the application only after the application is downloaded and locally installed. Because an installation package file of the application is usually large in size, it takes some time to download and install the application. How to conveniently search for and view the functional interface in the application is an urgent problem to be resolved.

### SUMMARY

This application provides an interface display method and an electronic device, so that before the electronic device displays an interface of a second application, the electronic device can first display, by using a first application or a first service, an interface searched for by a user, to preview an interface associated with an entered keyword without downloading the second application.

According to a first aspect, an embodiment of this application provides an interface display method. The method includes: An electronic device displays a first search interface. The electronic device receives a first keyword entered by a user on the first search interface. The electronic device displays a first interface, where the first interface includes first content related to the first keyword, and the first interface is an interface of a first application or a first service. The electronic device receives a first operation performed by the user on the first interface. The electronic device displays a second interface of a second application in response to the first operation, where the second interface includes second content and one or more function controls, and the second content is related to the first content.

The first content may be description information related to the first keyword, for example, a name of the first keyword, location information of the first keyword, price information of the first content, or comment information of the first content.

The second content may also be the description information related to the first keyword, for example, the name of the first keyword, the location information of the first keyword, the price information of the first content, or the comment information of the first content. The second content may include the first content, or a part of the second content may be the same as a part of the first content.

The first application or the first service may be a distribution application or a distribution service, and the second application may be a full application.

According to the method provided in the first aspect, before the electronic device displays an interface of the second application, the electronic device can first display, by using the first application or the first service, an interface searched for by the user. After the user determines to perform some service operations, the electronic device displays the interface searched for by the user in the second application, to preview an interface associated with a keyword entered by the user, without downloading the second application. In addition, one application can have a plurality of different distribution entries, so that one full application has a plurality of different starting manners.

With reference to the first aspect, in a possible implementation, the first application is an application associated with the second application, or the first service is a service associated with the second application.

Optionally, when a developer develops the first application or the first service, and the second application, the developer establishes an association relationship between the first application and the second application, or the developer establishes an association relationship between the first service and the second application.

With reference to the first aspect, in a possible implementation, that the first application is an application associated with the second application, or the first service is a service associated with the second application specifically includes: an application identifier of the first application is associated with an application identifier of the second application, or a service identifier of the first service is associated with an application identifier of the second application.

That the application identifier of the first application is associated with the application identifier of the second application, or the service identifier of the first service is associated with the application identifier of the second application means that a binding relationship is established between the first application and the second application, or a binding relationship is established between the first service and the second application. The electronic device can match the second application based on the application identifier of the first application, or match the second application based on the service identifier of the first service.

Optionally, the application identifier of the first application and the application identifier of the second application may be the same or may be different.

The application identifier of the application includes but is not limited to: an installation package name of the application, signature information of the application, and the like.

With reference to the first aspect, in a possible implementation, that the electronic device displays a second interface of a second application in response to the first operation specifically includes: The electronic device determines the application identifier of the second application and an address of the second interface in response to the first operation; and the electronic device displays the second interface based on the application identifier of the second application and the address of the second interface.

Optionally, an installation package of the first application or the first service includes the application identifier of the second application and the address of the second interface, and the electronic device may determine the application identifier of the second application and the address of the second interface from the installation package of the first application or the first service. When developing the installation package of the first application or the first service, the developer may configure the application identifier of the second application and the address of the second interface in the installation package of the first application or the first service.

For example, the address of the second interface may be a link of the second interface, for example, a deeplink (deeplink).

With reference to the first aspect, in a possible implementation, if the second application is not installed on the electronic device, before the electronic device displays a second interface of a second application, the method further includes: In response to the first operation, the electronic device downloads the second application from an application server, and installs the second application.

In another possible implementation, the electronic device may display a download interface of the second application.

In another possible implementation, after the electronic device downloads and installs the second application, the electronic device may automatically display the second interface based on the application identifier of the second application and the address of the second interface without receiving a user operation.

With reference to the first aspect, in a possible implementation, an installation package file of the second application is larger than an installation package file of the first application or the first service. For example, the installation package file of the first application is about 1 M, and the installation package file of the first application is greater than 10 M, for example, 50 M to 100 M.

With reference to the first aspect, in a possible implementation, the second application and the first application or the first service are developed by a same developer.

With reference to the first aspect, in a possible implementation, a third application is further associated with the second application, or a second service is associated with the second application. The method further includes: The electronic device receives a second keyword entered by the user on the first search interface. The electronic device displays a third interface, where the third interface includes third content related to the second keyword, and the third interface is an interface of the third application or the second service. The electronic device receives a second operation performed by the user on the third interface. The electronic device displays a fourth interface of the second application in response to the second operation, where the fourth interface includes fourth content and one or more function controls, and the fourth content is related to the third content. In this way, one second application may be associated with both the first application and the third application. That is, one full application may be associated with a plurality of distribution applications, so that the one full application has a plurality of different distribution entries.

With reference to the first aspect, in a possible implementation, the one or more function controls include a first control. After the electronic device displays a second interface of a second application, the method further includes: The electronic device receives a third operation performed by the user on the first control; and the electronic device completes a first task item in response to the third operation. The first task item includes but is not limited to: a ticket purchase task item, a hotel reservation task item, a meal reservation task item, and the like.

With reference to the first aspect, in a possible implementation, before the electronic device displays a first interface, the method further includes: The electronic device displays a fifth interface. That the electronic device displays a first interface specifically includes: The electronic device receives a fourth operation for the fifth interface; and the electronic device displays the first interface in response to the fourth operation. That is, the electronic device may directly accept an operation performed by the user on the fifth interface, and display the first interface.

In another possible implementation, the fifth interface further includes a second control. The electronic device accepts an input operation performed by the user on the second control on the fifth interface, and displays the first interface.

With reference to the first aspect, in a possible implementation, that the electronic device displays the first interface in response to the fourth operation specifically includes: In response to the fourth operation, the electronic device downloads and installs the first application or the first service; and the electronic device displays the first interface of the first application or the first service. That is, the electronic device downloads and installs the first application or the first service only when the user searches for the first application or the first service.

With reference to the first aspect, in a possible implementation, before the electronic device receives a first keyword entered by a user on the first search interface, the method further includes: When downloading and installing the second application, the electronic device downloads and installs the first application or the first service. That is, when downloading and installing the second application, the electronic device downloads and locally installs the first application or the first service.

With reference to the first aspect, in a possible implementation, after the electronic device downloads and installs the first application, the method further includes: The electronic device receives and responds to a user operation, and displays a service management interface, where the service management interface includes a setting item of the first application or the first service.

With reference to the first aspect, in a possible implementation, the method further includes: The electronic device receives a fifth operation for the displayed service management interface; and in response to the fifth operation, the electronic device deletes the first application or the first service, and stops displaying the setting item of the first application or the first service on the displayed service management interface. In this way, the user can actively delete the first application or the first service, to release storage space of the electronic device.

With reference to the first aspect, in a possible implementation, the method further includes: The electronic device outputs first prompt information, where the first prompt information indicates, to the user, whether to download a fourth application or a third service; and the fourth application is an application associated with the second application, or the third service is a service associated with the second application. In this way, when there is a new distribution application, the electronic device can indicate, to the user, whether to install the new distribution application, so as to respect a willingness of the user.

In a possible implementation, when outputting the first prompt information, the electronic device further outputs a third control and a fourth control. The electronic device receives an operation performed by the user on the third control, and determines to download and install the fourth application or the third service. Alternatively, the electronic device may receive an operation performed by the user on the fourth control, and refuse to download and install the fourth application or the third service.

With reference to the first aspect, in a possible implementation, the method further includes: The electronic device outputs second prompt information, where the second prompt information indicates, to the user, that the first application or the first service has not been used within a first time period, and indicates, to the user, whether to delete the first application or the first service. In this way, the electronic device can actively monitor the first application or the first service that is not used by the user for a long time, and indicate the user to delete the first application or the first service that is not used for a long time.

According to a second aspect, an embodiment of this application provides an electronic device, where the electronic device includes one or more processors and one or more memories, the one or more memories are coupled to the one or more processors, the one or more memories are configured to store computer program code, the computer program code includes computer instructions, and the one or more processors invoke the computer instructions, to enable the electronic device to perform the following steps: displaying a first search interface; receiving a first keyword entered by a user on the first search interface; displaying a first interface, where the first interface includes first content related to the first keyword, and the first interface is an interface of a first application or a first service; receiving a first operation performed by the user on the first interface; and displaying a second interface of a second application in response to the first operation, where the second interface includes second content and one or more function controls, and the second content is related to the first content.

The first content may be description information related to the first keyword, for example, a name of the first keyword, location information of the first keyword, price information of the first content, or comment information of the first content.

The second content may also be the description information related to the first keyword, for example, the name of the first keyword, the location information of the first keyword, the price information of the first content, or the comment information of the first content. The second content may include the first content, or a part of the second content may be the same as a part of the first content.

The first application or the first service may be a distribution application or a distribution service, and the second application may be a full application.

According to the method provided in the first aspect, before the electronic device displays an interface of the second application, the electronic device can first display, by using the first application or the first service, an interface searched for by the user. After the user determines to perform some service operations, the electronic device displays the interface searched for by the user in the second application, to preview an interface associated with a keyword entered by the user, without downloading the second application. In addition, one application can have a plurality of different distribution entries, so that one full application has a plurality of different starting manners.

With reference to the second aspect, in a possible implementation, the first application is an application associated with the second application, or the first service is a service associated with the second application. Optionally, when a developer develops the first application or the first service, and the second application, the developer establishes an association relationship between the first application and the second application, or the developer establishes an association relationship between the first service and the second application.

With reference to the second aspect, in a possible implementation, that the first application is an application associated with the second application, or the first service is a service associated with the second application specifically includes: an application identifier of the first application is associated with an application identifier of the second application, or a service identifier of the first service is associated with an application identifier of the second application.

That the application identifier of the first application is associated with the application identifier of the second application, or the service identifier of the first service is associated with the application identifier of the second application means that a binding relationship is established between the first application and the second application, or a binding relationship is established between the first service and the second application. The electronic device can match the second application based on the application identifier of the first application, or match the second application based on the service identifier of the first service.

Optionally, the application identifier of the first application and the application identifier of the second application may be the same or may be different.

The application identifier of the application includes but is not limited to: an installation package name of the application, signature information of the application, and the like.

With reference to the second aspect, in a possible implementation, the one or more processors invoke the computer instructions, to enable the electronic device to perform the following step: determining the application identifier of the second application and an address of the second interface in response to the first operation; and displaying the second interface based on the application identifier of the second application and the address of the second interface.

Optionally, an installation package of the first application or the first service includes the application identifier of the second application and the address of the second interface, and the electronic device may determine the application identifier of the second application and the address of the second interface from the installation package of the first application or the first service. When developing the installation package of the first application or the first service, the developer may configure the application identifier of the second application and the address of the second interface in the installation package of the first application or the first service.

For example, the address of the second interface may be a link of the second interface, for example, a deeplink (deeplink).

With reference to the second aspect, in a possible implementation, if the second application is not installed on the electronic device, before the electronic device displays a second interface of a second application, the one or more processors invoke the computer instructions, to enable the electronic device to perform the following step: in response to the first operation, downloading the second application from an application server, and installing the second application. In another possible implementation, a download interface of the second application may be displayed. In another possible implementation, after the electronic device downloads and installs the second application, the electronic device may automatically display the second interface based on the application identifier of the second application and the address of the second interface without receivinga user operation.

With reference to the second aspect, in a possible implementation, an installation package file of the second application is larger than an installation package file of the first application or the first service. For example, the installation package file of the first application is about 1 M, and the installation package file of the first application is greater than 10 M, for example, 50Mto 100 M.

With reference to the second aspect, in a possible implementation, the second application and the first application or the first service are developed by a same developer.

With reference to the second aspect, in a possible implementation, a third application is further associated with the second application, or a second service is associated with the second application. The one or more processors invoke the computer instructions, to enable the electronic device to perform the following steps: receiving a second keyword entered by the user on the first search interface; displaying a third interface, where the third interface includes third content related to the second keyword, and the third interface is an interface of the third application or the second service; receiving a second operation performed by the user on the third interface; and displaying a fourth interface of the second application in response to the second operation, where the fourth interface includes fourth content and one or more function controls, and the fourth content is related to the third content. In this way, one second application may be associated with both the first application and the third application. That is, one full application may be associated with a plurality of distribution applications, so that the one full application has the plurality of different distribution entries.

With reference to the second aspect, in a possible implementation, the one or more function controls include a first control. After the electronic device displays a second interface of a second application, the one or more processors invoke the computer instructions, to enable the electronic device to perform the following steps: receiving a third operation performed by the user on the first control; and completing a first task item in response to the third operation. The first task item includes but is not limited to: a ticket purchase task item, a hotel reservation task item, a meal reservation task item, and the like.

With reference to the second aspect, in a possible implementation, before the electronic device displays a first interface, the one or more processors invoke the computer instructions, to enable the electronic device to perform the following steps: displaying a fifth interface; and the displaying a first interface specifically includes: receiving a fourth operation for the fifth interface; and displaying the first interface in response to the fourth operation. That is, the electronic device may directly accept an operation performed by the user on the fifth interface, and display the first interface.

In another possible implementation, the fifth interface further includes a second control. The electronic device accepts an input operation performed by the user on the second control on the fifth interface, and displays the first interface.

With reference to the second aspect, in a possible implementation, the one or more processors invoke the computer instructions, to enable the electronic device to perform the following steps: in response to the fourth operation, downloading and installing the first application or the first service; and displaying the first interface of the first application or the first service. That is, the electronic device downloads and installs the first application or the first service only when the user searches for the first application or the first service.

With reference to the second aspect, in a possible implementation, before the electronic device receives a first keyword entered by a user on the first search interface, the one or more processors invoke the computer instructions, to enable the electronic device to perform the following steps: when downloading and installing the second application, downloading and installing the first application or the first service. That is, when downloading and installing the second application, the electronic device downloads and locally installs the first application or the first service.

With reference to the second aspect, in a possible implementation, after the electronic device downloads and installs the first application, the one or more processors invoke the computer instructions, to enable the electronic device to perform the following step: receiving and responding to a user operation, and displaying a service management interface, where the service management interface includes a setting item of the first application or the first service.

With reference to the second aspect, in a possible implementation, the one or more processors invoke the computer instructions, to enable the electronic device to perform the following steps: in response to the fifth operation, deleting the first application or the first service, and stopping displaying the setting item of the first application or the first service on the displayed service management interface. In this way, the user can actively delete the first application or the first service, to release storage space of the electronic device.

With reference to the second aspect, in a possible implementation, the one or more processors invoke the computer instructions, to enable the electronic device to perform the following step: outputting first prompt information, where the first prompt information indicates, to the user, whether to download a fourth application or a third service; and the fourth application is an application associated with the second application, or the third service is a service associated with the second application. In this way, when there is a new distribution application, the electronic device can indicate, to the user, whether to install the new distribution application, so as to respect a willingness of the user.

In a possible implementation, when outputting the first prompt information, the electronic device further outputs a third control and a fourth control. The electronic device receives an operation performed by the user on the third control, and determines to download and install the fourth application or the third service. Alternatively, the electronic device may receive an operation performed by the user on the fourth control, and refuse to download and install the fourth application or the third service.

With reference to the second aspect, in a possible implementation, the one or more processors invoke the computer instructions, to enable the electronic device to perform the following step: outputting second prompt information, where the second prompt information indicates, to the user, that the first application or the first service has not been used within a first time period, and indicates, to the user, whether to delete the first application or the first service. In this way, the electronic device can actively monitor the first application or the first service that is not used by the user for a long time, and indicate the user to delete the first application or the first service that is not used for a long time.

According to a third aspect, an embodiment of this application provides a computer-readable storage medium, where the computer-readable storage medium stores instructions, and when the instructions are run on an electronic device, the electronic device is enabled to perform the interface display method according to any possible implementation of any one of the foregoing aspects.

According to a fourth aspect, an embodiment of this application provides a computer program product, where when the computer program product is executed by an electronic device, the electronic device is enabled to perform the interface display method according to any possible implementation of any one of the foregoing aspects.

For beneficial effects of the second aspect to the fourth aspect, refer to related descriptions of the beneficial effects in the first aspect. Details are not described herein again in embodiments of this application.

### BRIEF DESCRIPTION OF DRAWINGS

FIG. 1A to FIG. 1D are example diagrams in which an electronic device 100 may find a first an application 1 based on two different keywords according to an embodiment of this application;
FIG. 2 is an example diagram of a structure of an electronic device 100 according to an embodiment of this application;
FIG. 3 is an example block diagram of a software structure of an electronic device 100 according to an embodiment of this application;
FIG. 4A and FIG. 4B are example diagrams of a framework according to an embodiment of this application;
FIG. 5A is an example diagram of displaying an icon 501 of an application 1 according to an embodiment of this application;
FIG. 5B to FIG. 5D are example diagrams of displaying an icon of a first distribution application according to an embodiment of this application;
FIG. 5E and FIG. 5F are example diagrams of displaying prompt information according to an embodiment of this application;
FIG. 6A to FIG. 6C are example diagrams in which an electronic device 100 receives a user operation to delete a distribution application installed on the electronic device 100 according to an embodiment of this application;
FIG. 7A to FIG. 7I are example diagrams in which different keywords are entered into an electronic device 100 to start an application 1 according to an embodiment of this application;
FIG. 8 is an example schematic flowchart of an application starting method according to an embodiment of this application; and
FIG. 9 is an example schematic flowchart of an interface display method according to an embodiment of this application.

### DESCRIPTION OF EMBODIMENTS

The following clearly describes the technical solutions in embodiments of this application in detail with reference to the accompanying drawings. In descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as an implication or implication of relative importance or implicit indication of a quantity of indicated technical features. Therefore, a feature limited by "first" or "second" may explicitly or implicitly include one or more features. In descriptions of embodiments of this application, unless otherwise specified, "a plurality of" means two or more than two.

A term "user interface (user interface, UI)" in the following embodiments of this application is a medium interface for interaction and information exchange between an application or an operating system and a user, and implements conversion between an internal form of information and a form acceptable to the user. The user interface is usually represented in a form of a graphical user interface (graphical user interface, GUI), and is a user interface that is related to a computer operation and that is displayed in a graphic manner. The user interface may be a text, an icon, a button, a menu, a tab, a text box, a dialog box, a status bar, a navigation bar, a widget, or another visual interface element that is displayed on a display of an electronic device.

Currently, a binding relationship may be established between one application and one or more keywords. The user may search for any one of the one or more keywords to find the application.

For example, if a binding relationship is established between an application 1 and two different keywords, the user may find the application 1 based on either of the two different keywords. For example, the two different keywords may be a name of the application 1 and a first museum.

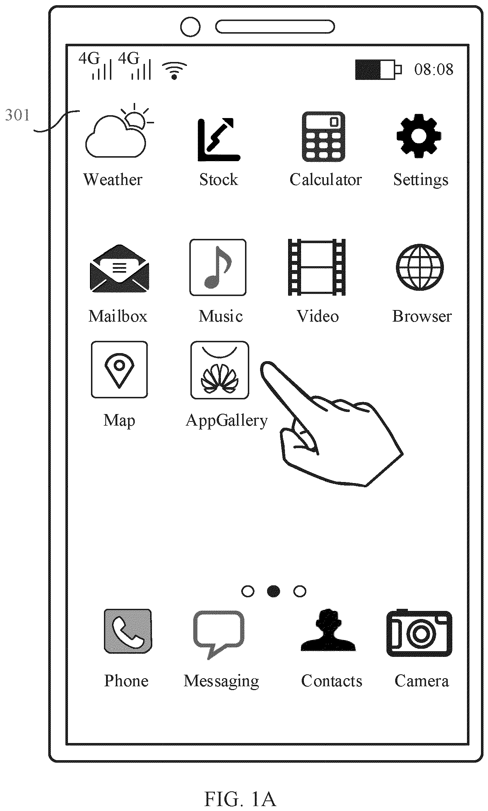

FIG. 1A to FIG. 1D are example diagrams in which an electronic device 100 finds an application 1 based on two different keywords.

FIG. 1A shows an interface 301 of a home screen of the electronic device 100. The interface 301 displays a page on which application icons are provided. The page includes a plurality of application icons (for example, a Weather application icon, a Stock application icon, a Calculator application icon, a Settings application icon, a Mailbox application icon, a Music application icon, a Video application icon, a Browser application icon, a Map application icon, and an AppGallery application icon). A page indicator is further displayed below the plurality of application icons, to indicate a location relationship between a currently displayed page and another page. There are a plurality of tray icons (for example, a Phone application icon, a Messaging application icon, a Contacts application icon, and a Camera application icon) below the page indicator, and the tray icons remain displayed during page switching.

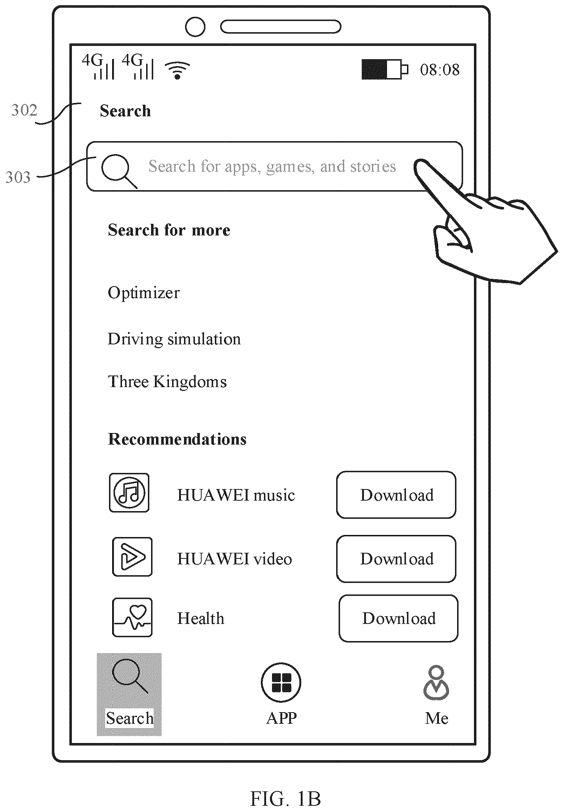

The electronic device 100 may receive an input operation (for example, a tap) performed by a user on the AppGallery application icon. In response to the input operation, the electronic device 100 may display an interface 302 shown in FIG. 1B. The interface 302 is a main interface of AppGallery. The interface 302 includes a search bar 303 for an application and a recommended application. The recommended application may be an Optimizer application, a Driving simulation application, a Three Kingdoms application, a HUAWEI music application, a HUAWEI video application, a Health application, and the like. The electronic device 100 may receive an input operation performed by the user on the search bar 303 (for example, entering a keyword of an application in the search bar 303), and then the electronic device 100 displays an application search interface.

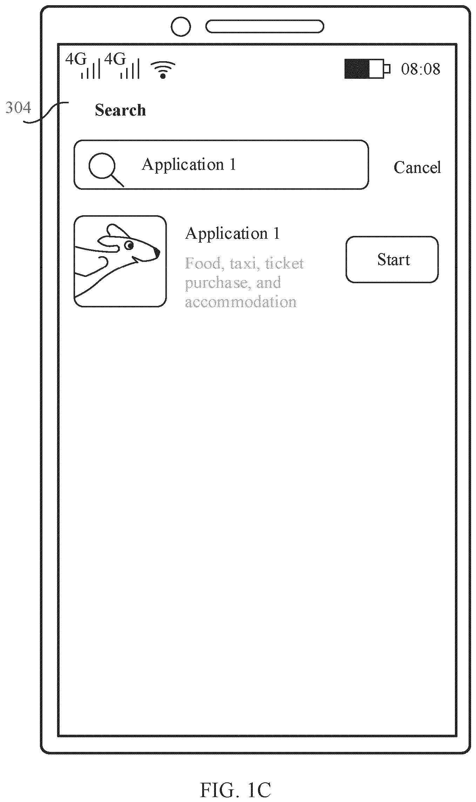

For example, as shown in FIG. 1C, after the electronic device 100 receives a keyword "Application 1" entered by the user in the search bar, the electronic device 100 may display a download interface or a startup interface of the application 1. If the application 1 has been locally installed, the electronic device 100 displays a startup interface 304 of the application 1 in response to the keyword "Application 1" entered by the user. The interface 304 includes an icon of the application 1, profile information of the application 1, a control for starting the application 1, and the like.

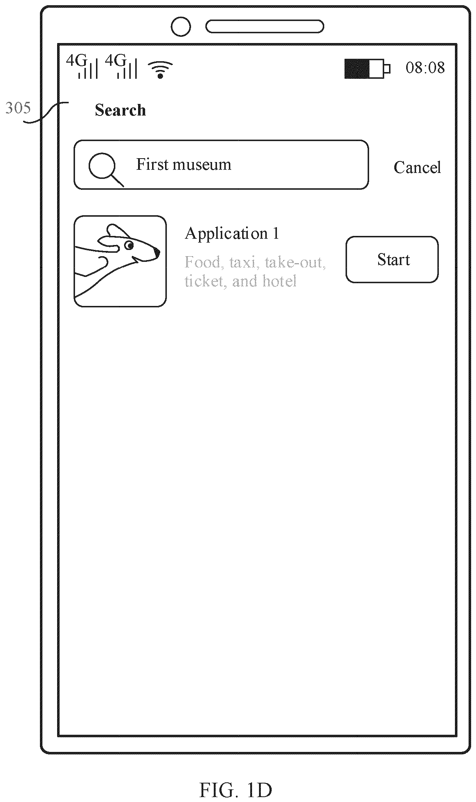

For example, as shown in FIG. 1D, after the electronic device 100 receives a keyword "First museum" entered by the user in the search bar, the electronic device 100 may display a download interface or a startup interface of the application 1. If the application 1 has been locally installed, the electronic device 100 displays a startup interface 305 of the application 1 in response to the keyword "First museum" entered by the user. The interface 305 includes an icon of the application 1, profile information of the application 1, a control for starting the application 1, and the like.

It can be learned from FIG. 1C and FIG. 1D that a same interface, for example, the startup interface of the application 1, is found based on a plurality of different keywords of a same application.

Optionally, if the application 1 has not been locally installed on the electronic device 100, after the electronic device 100 receives the keyword "Application 1" or the keyword "First museum" entered by the user in the search bar, the electronic device 100 may display the download interface of the application 1.

It can be learned from the foregoing analysis that when an application is bound to a plurality of different keywords and the user can search for the plurality of keywords to find the application, there are the following defects:

Defect 1: The foregoing manner cannot reflect a difference between interfaces displayed when the application 1 is found based on different keywords, that is, the user cannot preview the interfaces that are of the application 1 and that correspond to the different keywords. For example, the keyword is "First museum". When the user wants to browse a ticket purchase interface of the first museum, the user still obtains the startup interface of the application 1 by searching for the keyword "First museum". Then, the user needs to start the application 1, and then search for "First museum" in the application 1 to browse the ticket purchase interface of the first museum. As a result, user operations are complex, and experience is poor.

Defect 2: If the application 1 is not downloaded before, and if the user needs to browse the ticket purchase interface of the first museum after the user finds the application 1 based on the keyword "First museum", the user needs to download the application 1 and locally install the application 1. Then, the user needs to start the application 1, and then search the application 1 for the first museum to view the ticket purchase interface of the first museum. An installation package of the application 1 is large, and also takes a specific time to download. In addition, the application 1 after installation needs to occupy memory space of the electronic device 100. This affects user experience.

In view of this, an embodiment of this application provides an interface display method. The method includes the following steps.

1. A developer develops a full application of the application 1 and a distribution application of the application 1, and associates the distribution application of the application 1 with the full application of the application 1. For example, a binding relationship may be established between a keyword of the distribution application of the application 1 and a keyword of the full application of the application 1. The full application of the application 1, the distribution application of the application 1, and the binding relationship between the full application of the application 1 and the distribution application of the application 1 are separately uploaded to a server.

Associating the distribution application of the application 1 with the full application of the application 1 may be associating an application identifier of the distribution application of the application 1 with an application identifier of the full application of the application 1, that is, a binding relationship is established.

The full application of the application 1 may also be briefly referred to as the application 1, and the application 1 may also be referred to as a second application.

In some embodiments, the distribution application of the application 1 may also be referred to as a distribution service of the application 1.

Herein, the full application may be understood as an application downloaded by a user from an application store and locally installed by the user, and the full application is an application having a complete function, for example, having a registration and login interface, and different functional interfaces (for example, a catering take-out interface, a group buying interface, and a scenic spot ticket purchase interface). The different functional interfaces may be obtained by searching for different keywords. For example, the scenic spot ticket purchase interface may be obtained by searching for a name of the scenic spot.

The distribution application may be understood as a convenient application having only some functions of the full application. One full application may have one or more distribution applications. Different distribution applications may be obtained by searching for different keywords. For example, a distribution application used to display a scenic spot ticket purchase interface may be obtained by searching for a name of the scenic spot.

2. The electronic device receives and responds to a first keyword that is entered by the user and that is used to search for a first functional interface of the application 1. The electronic device obtains a first distribution application (or referred to as a first application or a first service) of the application 1 by searching for the first keyword, and displays a first interface of the first distribution application.

3. The electronic device 100 receives and responds to an input operation performed by the user on the first interface. The electronic device determines, based on the first keyword, the full application bound to the application 1. The electronic device 100 starts the full application of the application 1, and displays a second interface in the full application of the application 1, where information displayed on the second interface is more than information displayed on the first interface.

According to the method, one full application may have a plurality of different distribution applications, that is, one application has a plurality of different distribution entries, so that the one application is started in a plurality of different manners.

In addition, the electronic device first starts, based on a keyword entered by the user, a distribution application of the application 1, and displays an interface associated with the keyword entered by the user. In this case, the user can first preview an interface associated with the keyword entered by the user, without a need to start or download the full application of the application 1. After browsing the interface associated with the keyword entered by the user, the user determines to perform a service operation. In this case, the electronic device 100 may receive a user operation to start or download the full application of the application 1, and display an interface of the full application of the application 1, that is, the user may preview the interface associated with the keyword entered by the user.

Further, the user can preview, through the distribution application, the interface associated with the keyword entered by the user, so that the user does not need to download the full application to preview the interface associated with the keyword entered by the user. This saves resources.

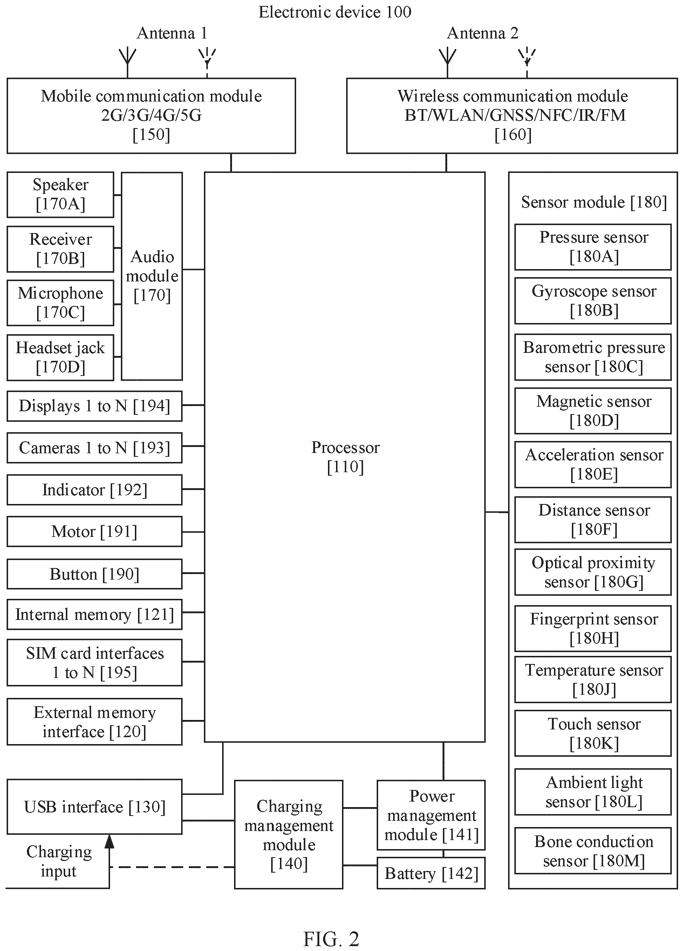

FIG. 2 is a diagram of a structure of the electronic device 100.

The electronic device 100 may be a large screen, a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, a smart city device, and/or the like. A specific type of the electronic device is not limited in embodiments of this application. In the following embodiments of this application, an example in which the electronic device 100 is a mobile phone is used for description.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or a combination of some components, or splits from some components, or different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to control instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured for a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device like an AR device.

It may be understood that an interface connection relationship between the modules that is shown in this embodiment of the present invention is merely an example for description, and does not constitute a limitation on the structure of the electronic device 100. In some other embodiments of this application, the electronic device 100 may alternatively use an interface connection manner different from that in the foregoing embodiment, or a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input by using a wireless charging coil of the electronic device 100. The charging management module 140 may further supply power to the electronic device through the power management module 141 while charging the battery 142.

The power management module 141 is configured to connect the battery 142 and the charging management module 140 to the processor 110. The power management module 141 receives an input from the battery 142 and/or the charging management module 140, and supplies power to the processor 110, the internal memory 121, the display 194, the camera 193, the wireless communication module 160, and the like. The power management module 141 may be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform filtering, amplification, or other processing on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same component along with the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and connects the display 194 to the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation and the like on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) processing unit. The NPU quickly processes input information by referring to a structure of a biological neural network, for example, a transfer mode between human brain neurons, and may further continuously perform self-learning. The NPU can implement applications such as intelligent cognition of the electronic device 100, such as image recognition, facial recognition, speech recognition, and text understanding.

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM generally referred to as DDR5 SDRAM), or the like. The non-volatile memory may include a magnetic disk storage device and a flash memory (flash memory).

The flash memory may be classified into an NOR flash, an NAND flash, a 3D NAND flash, and the like based on an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or the flash memory may be classified into a universal flash storage (English: universal flash storage, UFS), an embedded multimedia memory (embedded multi media Card, eMMC), and the like based on storage specifications.

The random access memory may be directly read and written by using the processor 110. The random access memory may be configured to store an executable program (for example, machine instructions) in an operating system or another running program, and may be further configured to store data of a user, data of an application, and the like.

The non-volatile memory may also store the executable programs, the data of the user and the application, and the like, and may be loaded into the random access memory in advance, to be directly read and written by the processor 110.

The external memory interface 120 may be configured to connect to an external non-volatile memory, to expand a storage capability of the electronic device 100. The external non-volatile memory communicates with the processor 110 through the external memory interface 120, to implement a data storage function. For example, files such as music and videos are stored in the external non-volatile memory.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be configured to listen to music or answer a call in a hands-free mode over the speaker 170A.

The receiver 170B, also referred to as an "earpiece", is configured to convert an electrical audio signal into a sound signal. When a call is answered or voice information is received by using the electronic device 100, the receiver 170B may be put close to a human ear to receive a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on a change in the capacitance. When a touch operation is performed on the display 194, the electronic device 100 detects intensity of the touch operation by using the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on a messaging application icon, an instruction for viewing an SMS message is executed. When a touch operation whose touch operation intensity is greater than or equal to a first pressure threshold is performed on a messaging application icon, an instruction for creating a new SMS message is executed.

The gyroscope sensor 180B may be configured to determine a moving posture of the electronic device 100. In some embodiments, angular velocities of the electronic device 100 around three axes (namely, axes x, y, and z) may be determined by using the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude based on the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover by using the magnetic sensor 180D. Further, a feature, for example, automatic unlocking upon opening of the flip cover is set based on a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in screen switching between a landscape mode and a portrait mode, a pedometer, or another application.

The distance sensor 180F is configured to measure a distance. The electronic device 100 may measure the distance in an infrared manner or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object through the photodiode. When plenty of reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear to make a call, to automatically perform screen-off for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing strategy based on the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided on the display 194. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or a touch button. The electronic device 100 may receive a button input, and generate a button signal input related to user settings and function control of the electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may be compatible with different types of SIM cards. The SIM card interface 195 may further be compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an eventdriven architecture, a micro kernel architecture, a micro service architecture, or a cloud architecture. In this embodiment of the present invention, an Android system of a layered architecture is used as an example to illustrate a software structure of the electronic device 100.

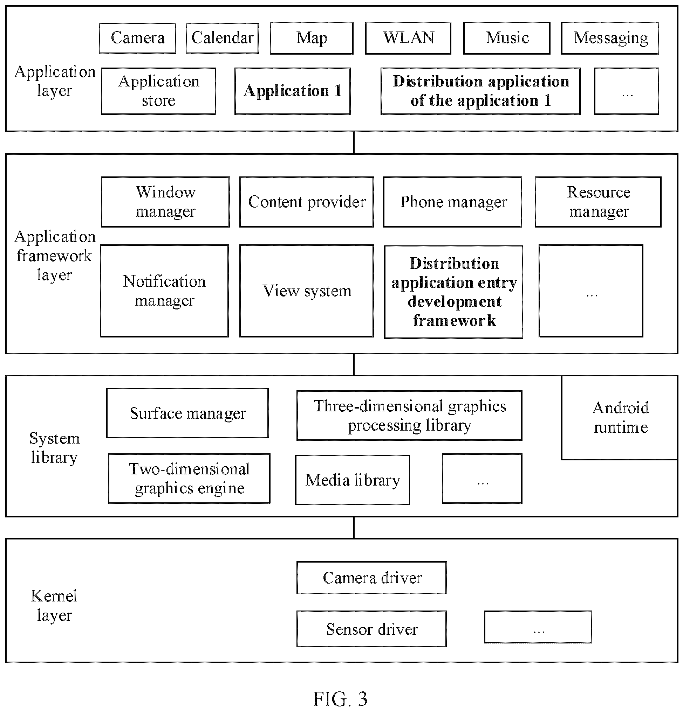

FIG. 3 is a block diagram of a software structure of an electronic device 100 according to an embodiment of the present invention.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 3, the application package may include applications such as Camera, Gallery, Calendar, Map, WLAN, Music, Messaging, Application store, a full application of an application 1, and a distribution application of the application 1. **The full application of the application 1 and the distribution application of the application 1 are two independent applications. In some embodiments, the full application of the application 1 may also be briefly referred to as the application 1. A user may download an installation package of the application 1 and locally install the application 1, where the application 1 may be displayed on a desktop of the electronic device 100 in a manner of an application icon. Alternatively, the user may download an installation package of the distribution application of the application 1 and install the distribution application of the application 1, but the distribution application of the application 1 is not displayed on a desktop of the electronic device 100 in a manner of an application icon.**

**It should be noted that the application is not limited to one distribution application, and the application 1 may have a plurality of different distribution applications.**

The application framework layer provides an application programming interface (application programming interface, API) and a programming framework for an application at the application layer. The application framework layer includes some predefined functions.

As shown in FIG. 3, the application framework layer may include a window manager, a content provider, a phone manager, a resource manager, a notification manager, a view system, **a distribution application entry development framework,** and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, browsing history, a bookmark, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run in the background, or a notification that appears on a screen in a form of a dialog window. For example, text information is displayed in the status bar, an announcement is given, the electronic device vibrates, or the indicator light blinks.

**The distribution application entry development framework is configured to provide an interface layout of a preview interface in the distribution application of the application 1, where the interface layout includes an element displayed on the interface, and the element includes but is not limited to: a text, an icon, a symbol, a picture, and the like. The distribution application entry development framework may further generate one or more preview interfaces of the distribution application of the application 1 and display the one or more preview interfaces of the distribution application of the application 1 based on an interface layout of the distribution application of the application 1.**

**In some embodiments, the interface layout of the preview interface in the distribution application of the application 1 may also be referred to as description information of the preview interface in the distribution application of the application 1.**

The Android runtime includes a kernel library and a virtual machine. The Android runtime is responsible for scheduling and management of the Android system.

The kernel library includes two parts: a function that needs to be invoked in Java language, and a kernel library of Android.

The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playing and recording of a plurality of common audio and video formats, static image files, and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a photographing scenario.

When the touch sensor 180K receives a touch operation, a corresponding hardware interruption is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a touch tap operation and a control corresponding to the touch tap operation is a control of a camera application icon. A camera application invokes an interface at the application framework layer, to start the camera application. Then, the camera driver is started by invoking the kernel layer, and a static image or a video is captured by using the camera 193.

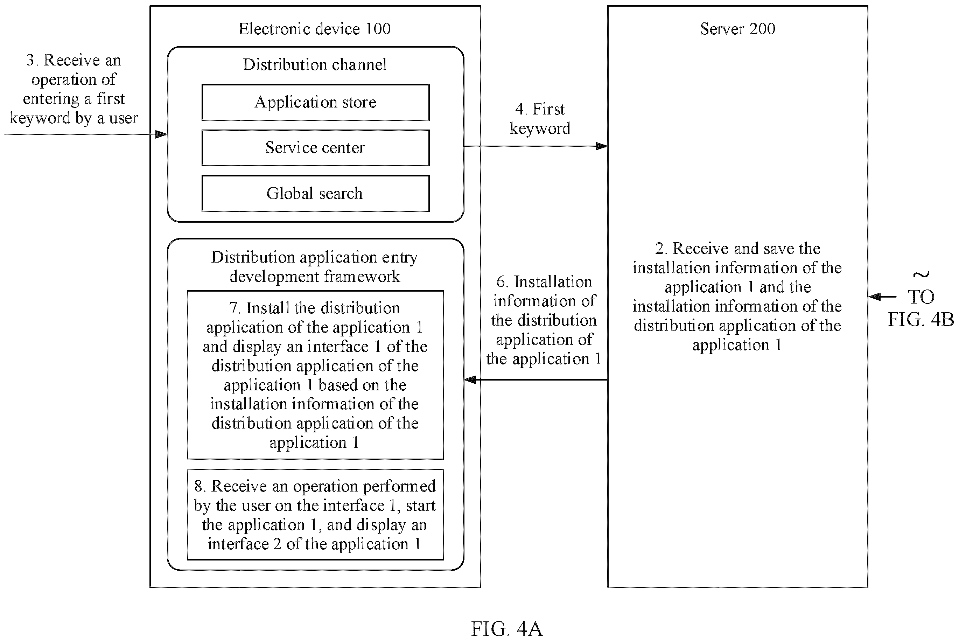

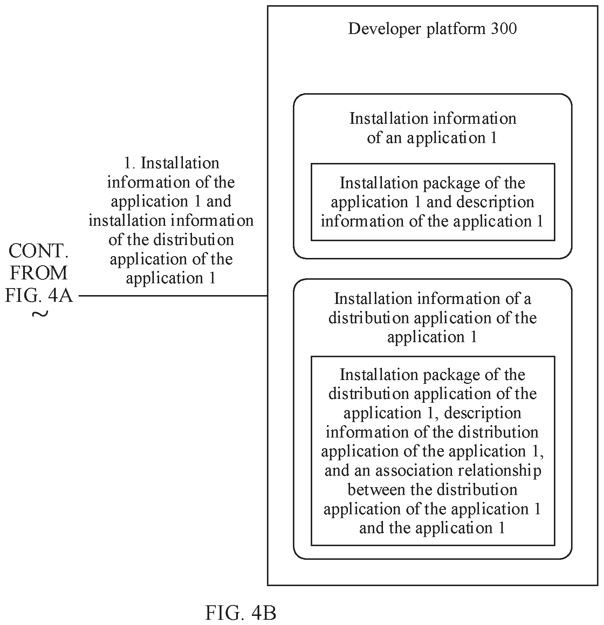

FIG. 4A and FIG. 4B are example diagrams of a framework according to an embodiment of this application.

A system architecture includes an electronic device 100, a server 200, and a developer platform 300. The developer platform 300 is a platform on which a developer develops and releases an application, and the developer platform 300 may be understood as a server.

In some embodiments, the server 200 and the developer platform 300 may be a same server.

First, a developer creates installation information of an application 1 and installation information of a distribution application of the application 1 on the developer platform 300.

The installation information of the application 1 includes an installation package of the application 1 and description information of the application 1. The description information of the application 1 includes but is not limited to: a keyword of the application 1 (or referred to as an application identifier of the application 1), a type of the application 1, interface description information of the application 1, and the like. The interface description information of the application 1 includes content displayed on an interface, a display location of the content displayed on the interface, and the like.

The installation information of the distribution application of the application 1 includes an installation package of the distribution application of the application 1, description information of the distribution application of the application 1, an association relationship between the distribution application of the application 1 and the application 1, and the like. The description information of the distribution application of the application 1 includes but is not limited to: a keyword of the distribution application (or referred to as an application identifier of the distribution application), a type of the distribution application, interface description information of the distribution application, and the like. The interface description information of the distribution application includes content displayed on an interface, a display location of the content displayed on the interface, and the like. The association relationship between the distribution application of the application 1 and the application 1 may be an association relationship between the keyword of the distribution application of the application 1 and the keyword of the application 1.

In some embodiments, the keyword of the distribution application may be a name of the distribution application. The keyword of the application 1 may also be a name of the application 1.

In some embodiments, there may be a plurality of keywords of the application 1 or a plurality of keywords of the distribution application of the application 1. That is, the electronic device 100 may find the application 1 based on a plurality of different keywords, or find the distribution application of the application 1 based on a plurality of different keywords.

It should be noted that the application 1 may be associated with a plurality of different distribution applications. For example, the application 1 is associated with a first distribution application of the application 1, a second distribution application of the application 1, and the like.

**Table 1**

| Distribution application | Keyword of the distribution application | Full application associated with the distribution application | Keyword of the full application associated with the distribution application |
|---|---|---|---|
| First distribution application | AAA | Application 1 | DDD |
| Second distribution application | BBB | Application 1 | DDD |
| Third distribution application | CCC | Second application | EEE |

Table 1 shows an example of an association relationship between a full application and a distribution application. For example, a full application associated with the first distribution application is the application 1. In this case, when a keyword of the first distribution application is "AAA", the electronic device 100 may find the first distribution application based on the keyword "AAA"; or when a keyword of the application 1 is "DDD", the electronic device 100 may find the application 1 based on the keyword "DDD". A full application associated with the second distribution application is also the application 1. In this case, when a keyword of the second distribution application is "BBB", the electronic device 100 may find the second distribution application based on the keyword "BBB". A full application associated with the third distribution application is the second application. In this case, when a keyword of the third distribution application is "CCC", the electronic device 100 may find the third distribution application based on the keyword "CCC"; and a keyword of the second application is "EEE", the electronic device 100 may find the second application based on the keyword "EEE".

Then, the developer platform 300 sends the installation information of the application 1 and the installation information of the distribution application of the application 1 to the server 200, and the server 200 receives and saves the installation information of the application 1 and the installation information of the distribution application of the application 1.

The electronic device 100 receives an operation of entering a first keyword by a user, where the first keyword is used to search for the first distribution application of the application 1.

For example, the user may enter the first keyword in an application store on the electronic device 100 to search for the first distribution application of the application 1, or the user may enter the first keyword in a service management center on the electronic device 100 to search for the first distribution application of the application 1, or the user may enter the first keyword in a global search area on a shortcut interface of the electronic device 100 to search for the first distribution application of the application 1. The user may further find the first distribution application of the application 1 in another area on the electronic device 100. This is not limited in embodiments of this application. The following embodiment of this application is described by using an example in which the electronic device 100 receives the first keyword entered by the user on the application store to search for the first distribution application of the application 1.

In response to an operation of entering the first keyword by the user, the electronic device 100 first locally searches for the first distribution application. If the first distribution application is not found, the electronic device 100 sends the first keyword to the server 200, and the server 200 finds the installation information of the first distribution application based on the first keyword and sends the installation information of the first distribution application to the electronic device 100. If the electronic device 100 locally finds the first distribution application, the electronic device 100 may not need to send the first keyword to the server 200.

In some embodiments, even if the electronic device 100 locally finds the first distribution application, the electronic device 100 may send the first keyword to the server 200, and then receive the installation information, sent by the server 200, of the first distribution application.

After the electronic device 100 receives the installation information, sent by the server 200, of the first distribution application, the electronic device 100 installs the first distribution application and displays an interface 1 (or referred to as a first interface) of the first distribution application based on the installation information of the distribution application of the application 1.

After the electronic device 100 displays the interface 1 of the first distribution application, the electronic device 100 receives an operation performed by the user on the interface 1, starts the application 1, and displays an interface 2 (or referred to as a second interface) of the application 1. Both the interface 2 of the application 1 and the interface 1 of the first distribution application are functional interfaces of a same type (for example, both are scenic spot ticket purchase interfaces), but content displayed on the interface 2 is richer than content displayed on the interface 1. In this way, the user can first preview the interface 1 of the first distribution application to view some simple information, and then the electronic device 100 receives the user operation to start the application 1, to complete a ticket purchase operation and the like.

In some embodiments, if the application 1 is not previously installed on the electronic device 100, after the electronic device 100 receives the operation performed by the user on the interface 1, the electronic device 100 may display a download interface of the application 1.

**The following describes an installation manner of the first distribution application of the application 1.**

**The electronic device 100 may install the first distribution application in any one of the following manners.**

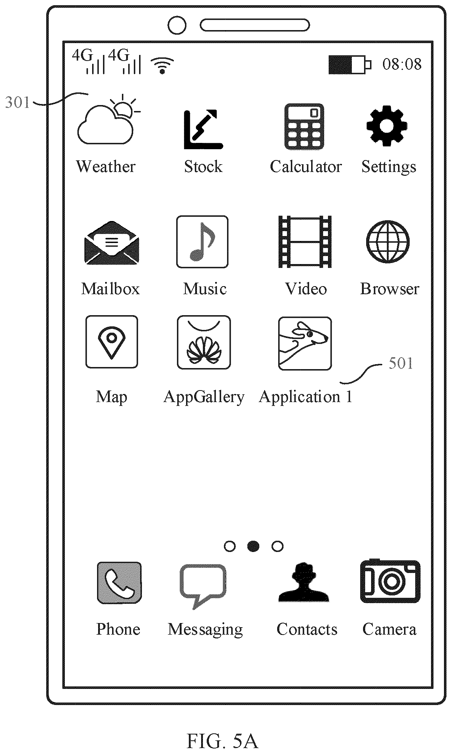

Manner 1: When the electronic device 100 receives a user operation to download the application 1, the electronic device 100 simultaneously downloads the installation information of the first distribution application and the installation information of the application 1, and locally saves the installation information. After the electronic device 100 obtains the installation information of the application 1, the electronic device 100 locally installs the application 1 and displays an icon of the application 1 on a desktop. For example, as shown in FIG. 5A, after the electronic device 100 locally installs the application 1, the electronic device 100 further displays an icon 501 of the application 1 on a user interface 301. In addition, after the electronic device 100 obtains the installation information of the first distribution application, the electronic device 100 locally installs the first distribution application, but the electronic device 100 does not display the icon of the first distribution application on the user interface 301.

It should be noted that, if the application 1 has a plurality of distribution applications, during downloading of the application 1, the electronic device 100 simultaneously downloads the installation information of the application 1 and installation information of the plurality of distribution applications, and locally stores all the installation information.

Optionally, the electronic device 100 may display, in the service management center, an icon of the installed first distribution application.

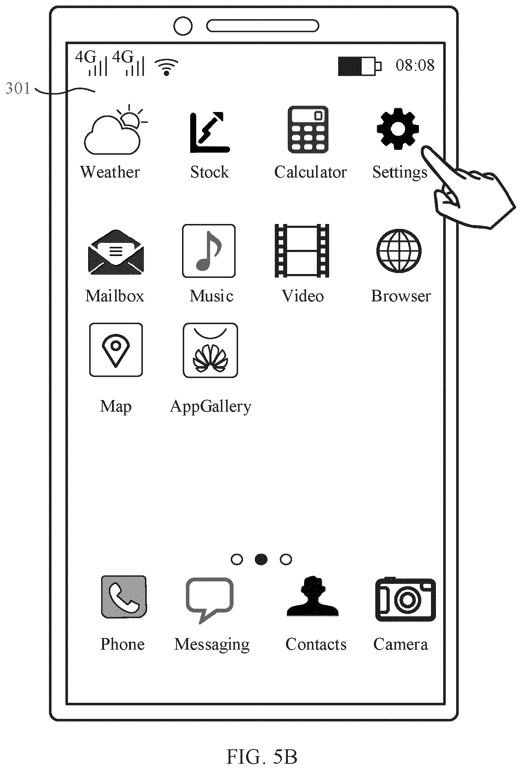

FIG. 5B to FIG. 5D are example diagrams of displaying an icon of the first distribution application according to this embodiment of this application.

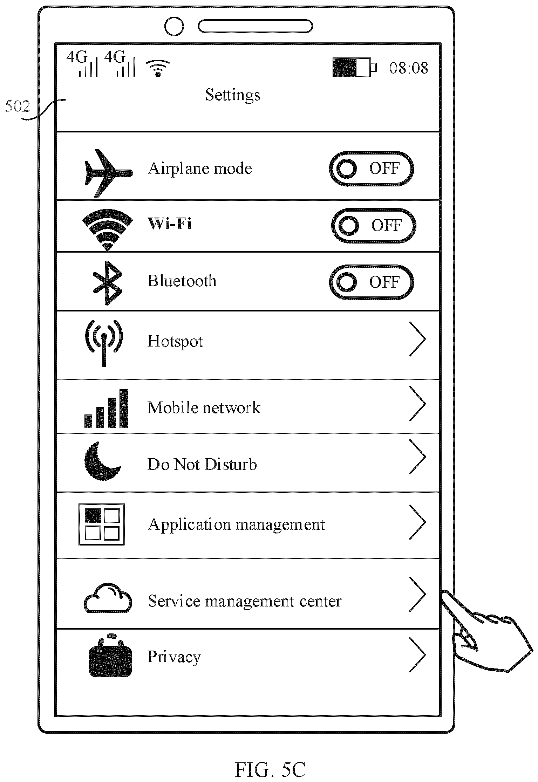

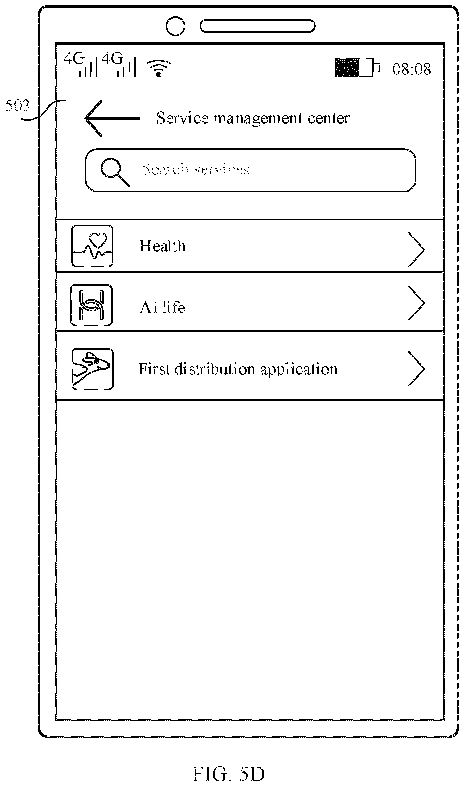

For example, as shown in FIG. 5B, the electronic device 100 receives an input operation (for example, a tap) performed by the user on a settings application on the user interface 301. In response to the input operation of the user, the electronic device 100 displays a user interface 502, shown in FIG. 5C, of the settings application. The user interface 502 includes a plurality of setting options, for example, an airplane mode setting option, a Wi-Fi setting option, a Bluetooth setting option, a personal hotspot setting option, a mobile network setting option, a Do Not Disturb setting option, an application management setting option, a service management center setting option, and a privacy setting option. As shown in FIG. 5C, the electronic device 100 receives an input operation (for example, a tap) performed by the user on the service management center setting option on the user interface 502. In response to the input operation of the user, the electronic device 100 displays a user interface 503 shown in FIG. 5D. The user interface 503 shows an icon of a service installed on the electronic device 100, for example, an icon of Health, an icon of AI life, or an icon of the first distribution application.

Manner 2: The application 1 may have a plurality of distribution applications, for example, hundreds of distribution applications. When the electronic device 100 downloads the installation information of the application 1, if the electronic device 100 simultaneously downloads installation information of the hundreds of distribution applications of the application 1, and locally installs the hundreds of distribution applications of the application 1, memory space on the electronic device 100 is occupied. In addition, the hundreds of distribution applications of the application 1 are not necessarily used by the user. To avoid the foregoing case, the electronic device 100 may obtain, through screening, some distribution applications from the plurality of distribution applications. While downloading the application 1, the electronic device 100 simultaneously downloads the installation information of the application 1 and installation information of the some distribution applications of the application 1, and locally saves the installation information. After the electronic device 100 obtains the installation information of the some distribution applications, the electronic device 100 locally installs the some distribution applications, and the electronic device 100 may display icons of the some distribution applications in the service management center.

The electronic device 100 may obtain, through screening, the some distribution applications from the plurality of distribution applications according to the following policies.

Policy 1: A developer obtains, through screening, the some distribution applications from the plurality of distribution applications. To be specific, the some distribution applications are preset, and during downloading of the installation information of the application 1, the electronic device 100 locally downloads the preset installation information of the some distribution applications.

Policy 2: A server may periodically collect usage of distribution applications on electronic devices of different users, for example, a frequency at which the user uses each distribution application. In this way, the server can sort the plurality of distribution applications of the application 1 based on situations in which different users use the distribution applications, to obtain top N (N is a positive integer greater than or equal to 1) distribution applications ranked by use frequency of the user. During downloading of the installation information of the application 1, the electronic device 100 also locally downloads installation information of the top N distribution applications ranked by use frequency of the user.

Manner 3: When the electronic device 100 receives a user operation to download the application 1, the electronic device 100 locally downloads only the installation information of the application 1 and saves the installation information. After the electronic device 100 obtains the installation information of the application 1, the electronic device 100 locally installs the application 1, and displays, on a desktop, an icon 501 of the application 1 shown in FIG. 5A.

Then, if the electronic device 100 receives an operation of searching for the first distribution application by the user, the electronic device 100 sends a request to a server, where the request is used to obtain the installation information of the first distribution application. Then, the electronic device 100 receives the installation information, sent by the server, of the first distribution application, and locally saves the installation information of the first distribution application. The electronic device 100 locally installs the first distribution application and displays an icon of the installed first distribution application in the service management center based on the installation information of the first distribution application. In this way, the electronic device 100 can download and install the first distribution application only when the user has a requirement, to prevent the electronic device 100 from downloading and installing the first distribution application in advance, so as not to occupy storage space of the electronic device 100.

**The following describes an update manner of the first distribution application of the application 1.**

**The electronic device 100 may update the first distribution application in any one of the following manners.**

Manner 1: In a possible implementation, the server may periodically (for example, one month is a period) update the top N distribution applications ranked by use frequency of the user. If updated top N distribution applications ranked by use frequency of the user are different from the top N distribution applications ranked by use frequency of the user, the server may automatically send installation information of the updated top N distribution applications ranked by use frequency of the user to the electronic device 100. After the electronic device 100 receives the installation information, sent by the server, of the updated top N distribution applications ranked by use frequency of the user, the electronic device 100 locally installs the updated top N distribution applications ranked by use frequency of the user.

In a possible implementation, the server may periodically (for example, one month is a period) update the top N distribution applications ranked by use frequency of the user. If updated top N distribution applications ranked by use frequency of the user are different from the top N distribution applications ranked by use frequency of the user, the server may send installation information of only a newly added distribution application to the electronic device 100. After receiving the installation information, sent by the server, of the newly added distribution application, the electronic device 100 locally installs the newly added distribution application.

In a possible implementation, after the server obtains an updated distribution application, the server may send a request to the electronic device 100, where the request is used by the electronic device 100 to output prompt information, to indicate, to the user, whether to update the distribution application of the application 1. If the user agrees to update the distribution application of the application 1, the server may send the installation information of the updated top N distribution applications ranked by use frequency of the user to the electronic device 100, or send the installation information of the newly added distribution application to the electronic device 100.

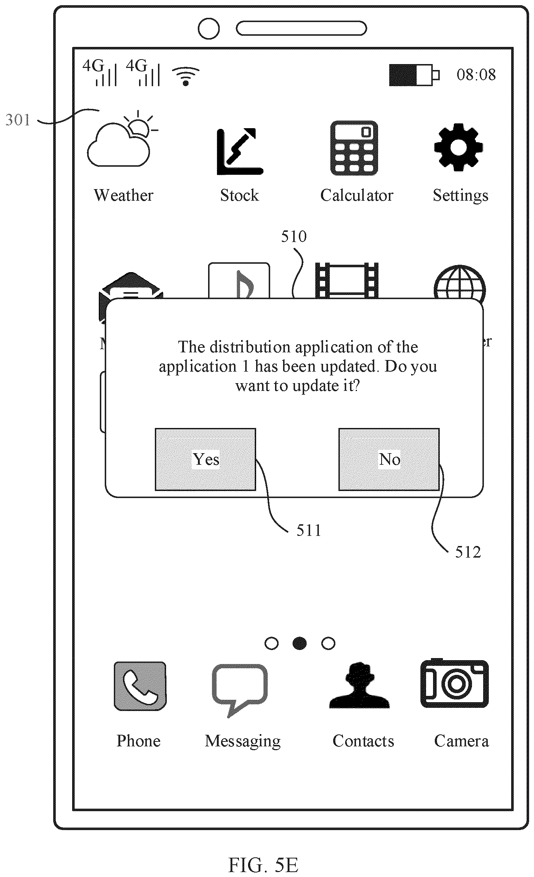

For example, as shown in FIG. 5E, the electronic device 100 may output prompt information 510, where the prompt information 510 indicates, to the user, whether to update the distribution application of the application 1. The prompt information 510 may include text information "The distribution application of the application 1 has been updated. Do you want to update it?". The prompt information 510 further includes a control 511 and a control 512. The electronic device 100 may receive an input operation (for example, a tap) performed by the user on the control 511. In response to the input operation of the user, the electronic device 100 agrees to update the distribution application of the application 1. In this case, the server may send the installation information of the updated top N distribution applications ranked by use frequency of the user to the electronic device 100, or send the installation information of the newly added distribution application to the electronic device 100. After the electronic device 100 receives the installation information, sent by the server, of the updated top N distribution applications ranked by use frequency of the user, or the installation information of the newly added distribution application, the electronic device 100 locally installs the newly added distribution application, and the electronic device 100 may display an icon of the newly added distribution application on an interface of the service management center. Alternatively, the electronic device 100 may receive an input operation (for example, a tap) performed by the user on the control 512. In response to the input operation of the user, the electronic device 100 forbids updating the distribution application of the application 1, and the server does not send, to the electronic device 100, the installation information of the updated top N distribution applications ranked by use frequency of the user, or the installation information of the newly added distribution application.

Manner 2: The electronic device 100 may periodically update a distribution application that is locally installed and that is of the application 1. For example, if the electronic device 100 detects that the distribution application locally installed on the electronic device 100 has not been used in a time period, the electronic device 100 may input prompt information, where the prompt information indicates, to the user, whether to delete the distribution application, so as to save storage space of the electronic device 100.

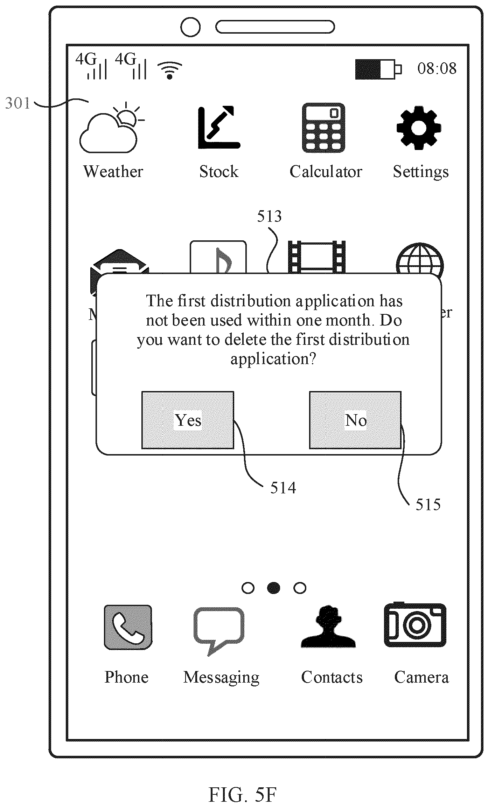

For example, as shown in FIG. 5F, the electronic device 100 may output prompt information 513, where the prompt information 513 indicates, to the user, whether to delete the first distribution application. The prompt information 513 may include text information "The first distribution application has not been used within one month. Do you want to delete the first distribution application?". The prompt information 513 includes a control 514 and a control 515. The electronic device 100 may receive an input operation (for example, a tap) performed by the user on the control 514. In response to the input operation of the user, the electronic device 100 agrees to delete the first distribution application, that is, the electronic device 100 deletes the installation information of the first distribution application, and the electronic device 100 also stops displaying an icon of the first distribution application on an interface of the service management center. Alternatively, the electronic device 100 may receive an input operation (for example, a tap) performed by the user on the control 515. In response to the input operation of the user, the electronic device 100 does not delete the first distribution application, and the electronic device 100 continues to display an icon of the first distribution application on an interface of the service management center.

Manner 3: The electronic device 100 may alternatively receive a user operation to delete a distribution application installed on the electronic device 100. In this way, the user can actively delete a distribution application that has not been used for a long time, to release memory space occupied by the distribution application.

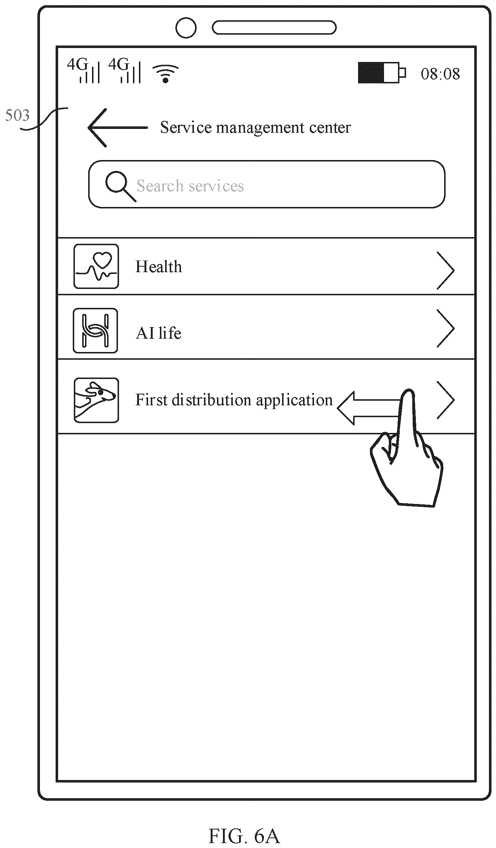

FIG. 6A to FIG. 6C are example diagrams in which the electronic device 100 receives a user operation to delete a distribution application installed on the electronic device 100.

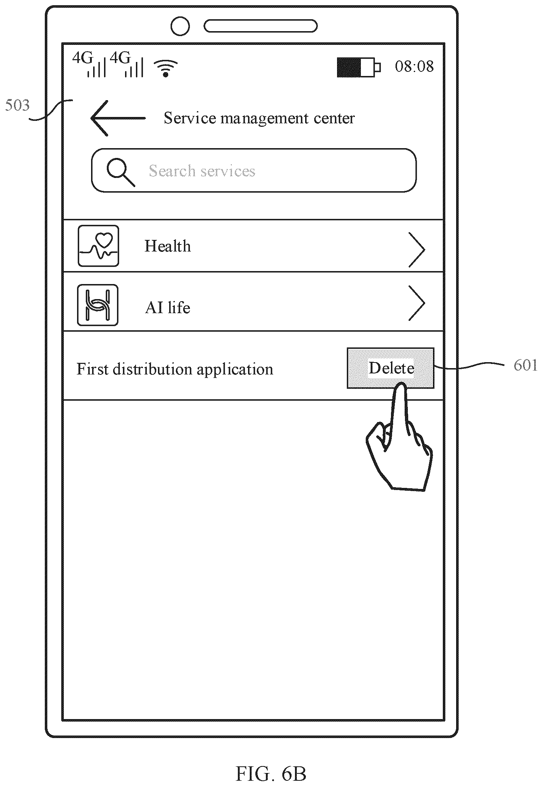

For example, as shown in FIG. 6A, the electronic device 100 receives a sliding operation (for example, a leftward sliding operation) performed by the user on a display area in which the icon of the first distribution application is located. In response to the sliding operation of the user, the electronic device 100 displays a delete control 601 shown in FIG. 6B.

In addition to the leftward sliding operation, the electronic device 100 may receive a touch-and-hold operation performed by the user on the display area in which the icon of the first distribution application is located. In response to the touch-and-hold operation of the user, the electronic device 100 may display the delete control 601 shown in FIG. 6B. Alternatively, the user may perform another operation to enable the electronic device 100 to display the delete control 601 shown in FIG. 6B. This is not limited in embodiments of this application.

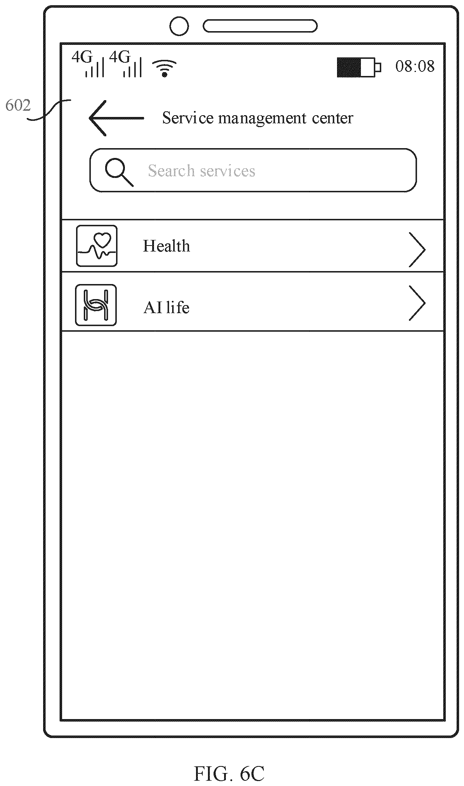

As shown in FIG. 6B, the electronic device 100 receives an input operation (for example, a tap) performed by the user on the delete control 601. In response to the input operation of the user, the electronic device 100 deletes the installed first distribution application, that is, deletes an installation package that is of the first distribution application that is stored in the electronic device 100, and the electronic device 100 no longer displays the icon of the first distribution application in the service management center. As shown in FIG. 6C, the electronic device 100 displays a user interface 602. A difference between the user interface 602 and the user interface 503 shown in FIG. 5D lies in that the icon of the first distribution application is no longer displayed on the user interface 602, and only an icon of a service and/or a distribution application that have been installed on the electronic device 100 is displayed, for example, an icon of Health and an icon of AI life.

**According to the interface display method provided in this embodiment of this application, the user enters different keywords, and the electronic device 100 may display different interfaces of a distribution application based on the different keywords entered by the user. Then, the electronic device 100 receives a user operation to start the application 1 and display a user interface of the application 1. The user may complete a service operation on the user interface of the application 1.**

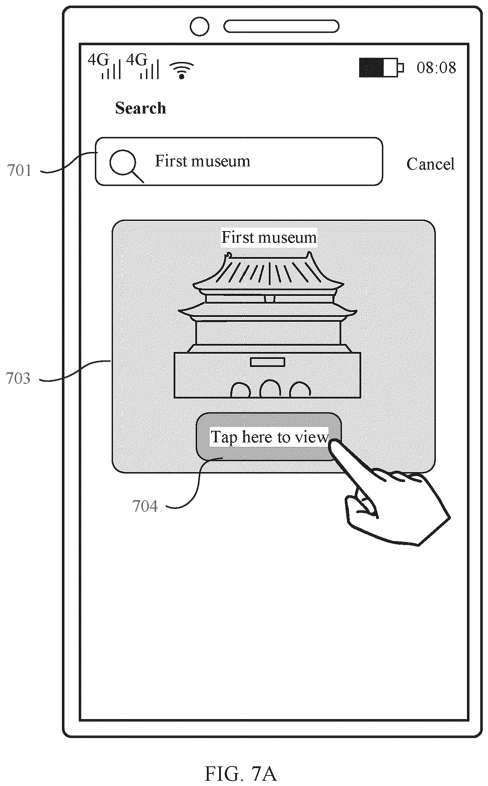

**FIG. 7A to FIG. 7I** **are example diagrams in which different keywords are entered into the electronic device 100 to start the application 1.**

For example, a keyword of the distribution application of the application 1 may be "First museum". The distribution application corresponding to the keyword "First museum" may be referred to as a "First museum" distribution application.

As shown in FIG. 7A, the electronic device 100 receives the keyword "First museum" entered by the user in a search bar 701 of the application store. In response to the keyword entered by the user, the electronic device 100 displays an icon 703 and a control 704 that are of the "First museum" distribution application. The electronic device 100 receives an input operation (for example, a tap) performed by the user on the control 704. In response to the input operation of the user, the electronic device 100 sends the keyword "First museum" to the server. Based on the keyword "First museum", the server searches for the distribution application corresponding to the keyword "First museum". If the distribution application is found, installation information of the "First museum" distribution application is sent to the electronic device 100. The electronic device 100 locally installs the "First museum" distribution application, and obtains, based on the installation information of the distribution application, a full application (for example, the application 1) corresponding to the distribution application.

In another possible implementation, if the electronic device 100 has previously obtained the installation information of the "First museum" distribution application, and has locally installed the "First museum" distribution application, after the electronic device 100 receives the input operation (for example, a tap) performed by the user on the control 704, the electronic device 100 obtains, based on the installation information that is of the "First museum" distribution application and that is locally stored, the full application (for example, the application 1) corresponding to the distribution application.

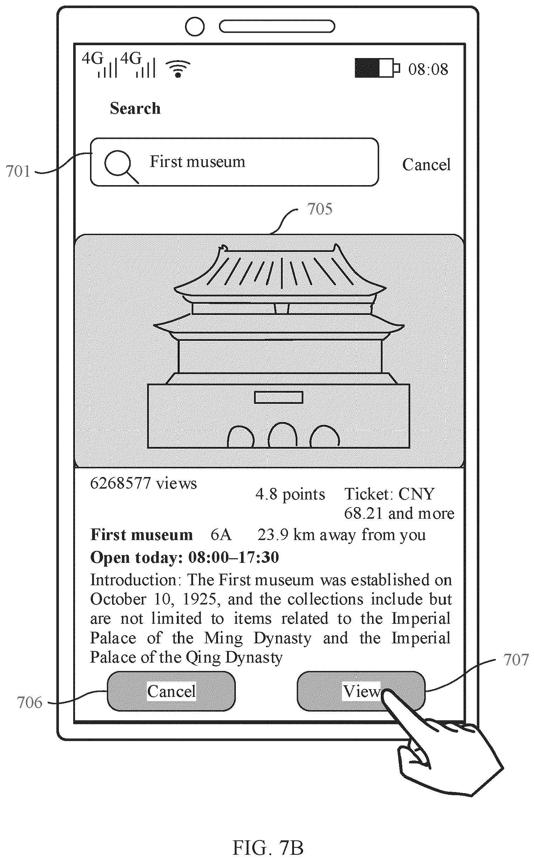

In some embodiments, the electronic device 100 receives the keyword "First museum" entered by the user in the search bar 701 of the application store. In response to the keyword entered by the user, the electronic device 100 may not display a user interface shown in FIG. 7A, but directly display a user interface 705 shown in FIG. 7B. The electronic device 100 receives the keyword "First museum" entered by the user in the search bar 701 of the application store. In response to the keyword entered by the user, the electronic device 100 sends the keyword "First museum" to the server. Based on the keyword "First museum", the server searches for the distribution application corresponding to the keyword "First museum". If the distribution application is found, the installation information of the "First museum" distribution application is sent to the electronic device 100. The electronic device 100 locally installs the "First museum" distribution application, and obtains, based on the installation information of the distribution application, the full application (for example, the application 1) corresponding to the distribution application. If the electronic device 100 has previously obtained the installation information of the "First museum" distribution application, and has locally installed the "First museum" distribution application, after the electronic device 100 receives the keyword "First museum" entered by the user in the search bar 701 of the application store, the electronic device 100 obtains, based on the installation information that is of the "First museum" distribution application and that is locally stored, the full application (for example, the application 1) corresponding to the distribution application.

Then, as shown in FIG. 7A, in response to the input operation (for example, a tap) performed by the user on the control 704, the electronic device 100 displays the user interface 705 shown in FIG. 7B. The user interface 705 displays a preview interface of the "First museum" distribution application, and the preview interface includes profile information of "First museum". In this way, when the application 1 is not started, the user can first preview an interface related to a keyword entered by the user. The profile information of "First museum" includes a quantity of views of the scenic spot "First museum" (for example, 6268577 person-times), a score of the scenic spot "First museum" (4.8 points), a ticket price of the scenic spot "First museum" (for example, CNY 68.21 and more), a rating of the scenic spot "First museum" (for example, a 6A scenic spot), a distance from the scenic spot "First museum" to the user (for example, 23.9 km), opening hours of the scenic spot "First museum" (for example, 8:00 a.m. to 5:30 p.m.), and brief introduction to the scenic spot "First museum" (for example, the First museum was established on October 10, 1925, and the collections include but are not limited to items related to the Imperial Palace of the Ming Dynasty and the Imperial Palace of the Qing Dynasty).

The user interface 705 further includes a control 706 and a control 707. The electronic device 100 may receive an input operation (for example, a tap) performed by the user on the control 706. In response to the input operation of the user, the electronic device 100 displays a user interface shown in FIG. 7A or FIG. 1B, to be specific, after the user previews the profile information of "First museum", if the user does not want to continue to purchase a ticket of "First museum", the user may stop, through an operation of triggering the control 706, starting the full application (namely, the application 1) of the "First museum" distribution application.

Alternatively, the electronic device 100 may receive an input operation (for example, a tap) performed by the user on the control 707. In response to the input operation of the user, the electronic device 100 starts the application 1 and displays a user interface 708 of the application 1, where the user interface 708 is a ticket purchase interface that is of the scenic spot "First museum" and that is displayed in the application 1. Compared with the user interface 708, the user interface 705 displays only a part of the profile information of the scenic spot "First museum". The profile information, displayed on the user interface 708, of the scenic spot "First museum" is richer than the profile information, displayed on the user interface 705, of the scenic spot "First museum". In addition, the user can complete some service operations (for example, a ticket purchase operation) on the user interface 708, but the user interface 705 displays only profile information of the scenic spot "First museum" and cannot receive some service operations completed by the user on the user interface 705.

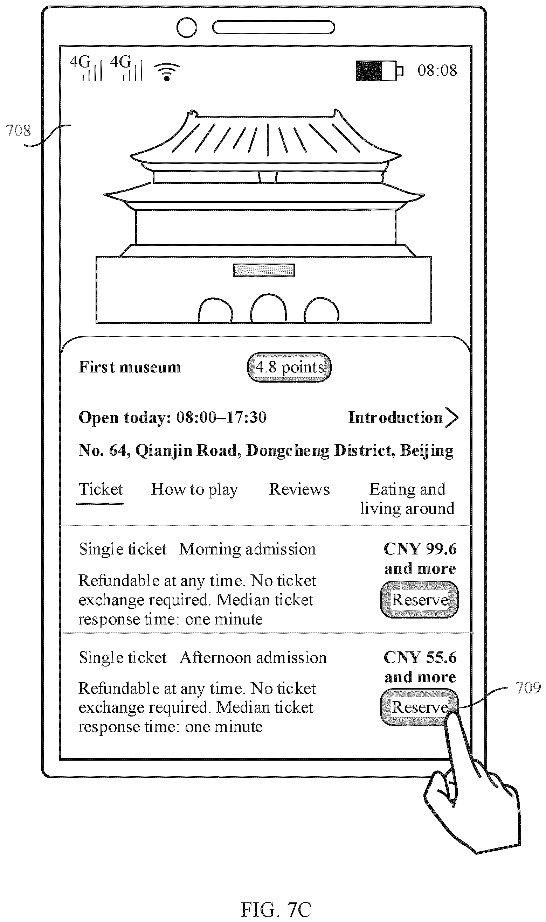

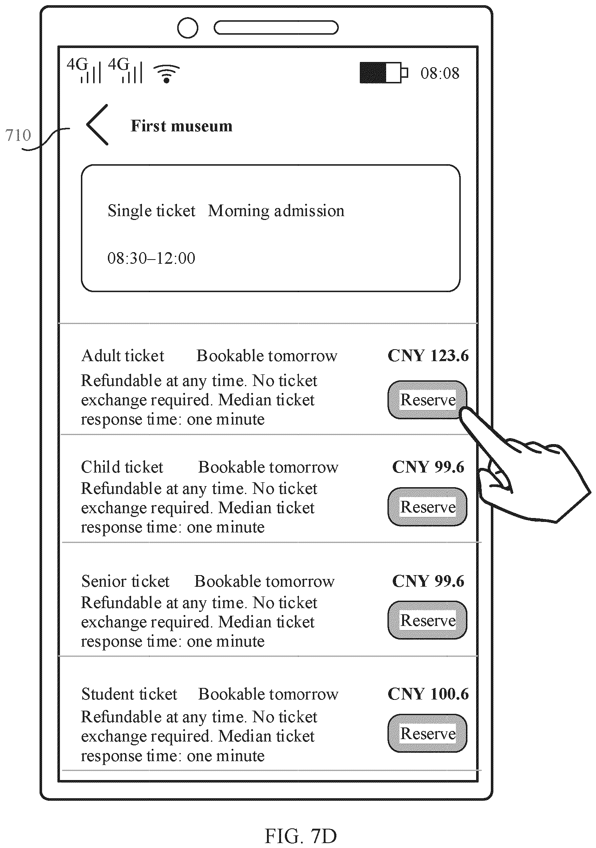

The user interface 708 includes the profile information of "First museum", for example, the score of the scenic spot "First museum" (4.8 points), the opening hours of the scenic spot "First Museum" (for example, 8:00 a.m. to 5:30 p.m.), and the address of the scenic spot "First museum" (for example, No. 64, Qianjin Road, Dongcheng District, Beijing). The electronic device 100 may also receive a user operation to view more preview information of the scenic spot "First museum". The user interface 708 further displays ticket information, for example, a single ticket, morning admission ticket information, and afternoon admission ticket information. As shown in FIG. 7C, the electronic device 100 receives an input operation (for example, a tap) performed by the user on a control 709. In response to the input operation of the user, the electronic device 100 displays a user interface 710 shown in FIG. 7D.

The user interface 710 provides an example of ticket purchase options for different groups, for example, a ticket purchase option for an adult ticket, a ticket purchase option for a child ticket, a ticket purchase option for a senior ticket, and a ticket purchase option for a student ticket. The electronic device 100 may receive an input operation performed by the user on the ticket purchase options for the different groups, to purchase a ticket. For example, the electronic device 100 may receive an input operation performed by the user on the ticket purchase option for the adult ticket, to purchase one or more adult tickets.

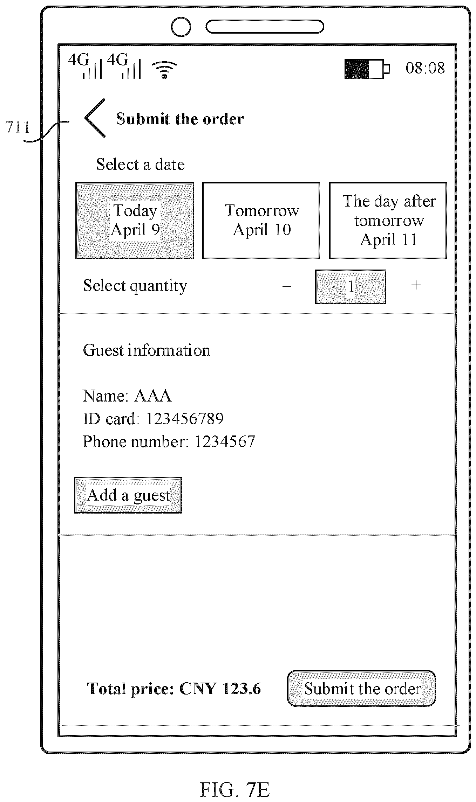

As shown in FIG. 7D, the electronic device 100 receives the input operation (for example, a tap) performed by the user on the ticket purchase option for the adult ticket. In response to the input operation of the user, the electronic device 100 displays a user interface 711 shown in FIG. 7E. The user interface 711 is an order payment interface. The user interface 711 includes a payment control and order information, for example, a ticket purchase date (for example, April 9), a quantity of tickets purchased (for example, 1), guest information (for example, a name is AAA, an ID card is 123456789, and a phone number is 1234567), and a total price of CNY 123.6. In this way, the user can complete a ticket purchase service operation on the ticket purchase interface provided by the application 1.

Alternatively, a keyword of the distribution application of the application 1 may be "First hotel". The distribution application corresponding to the keyword "First hotel" may be referred to as a "First hotel" distribution application.

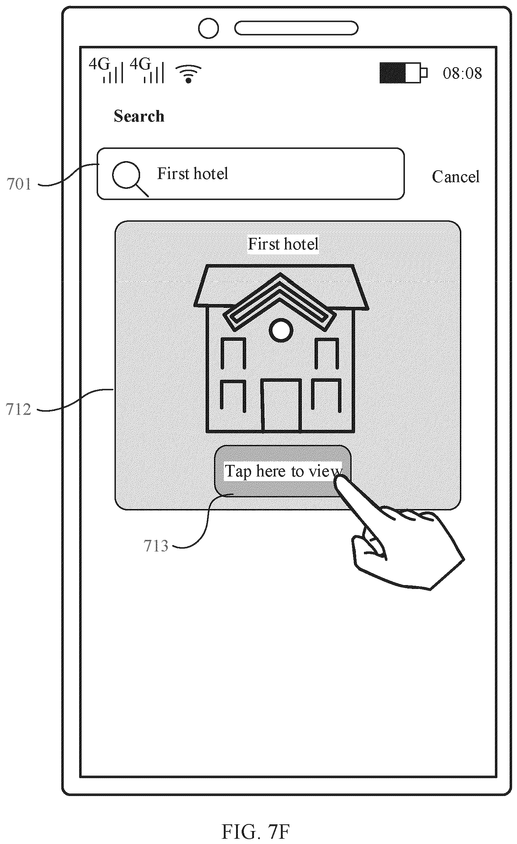

As shown in FIG. 7F, the electronic device 100 receives the keyword "First hotel" entered by the user in the search bar 701 of the application store. In response to the keyword entered by the user, the electronic device 100 displays an icon 712 and a control 713 that are of the "First hotel" distribution application. The electronic device 100 receives an input operation (for example, a tap) performed by the user on the control 713. In response to the input operation of the user, the electronic device 100 sends the keyword "First hotel" to the server. Based on the keyword "First hotel", the server searches for the distribution application corresponding to the keyword "First hotel". If the distribution application is found, installation information of the "First hotel" distribution application is sent to the electronic device 100. The electronic device 100 locally installs the "First hotel" distribution application, and obtains, based on the installation information of the distribution application, a full application (for example, the application 1) corresponding to the distribution application.

In another possible implementation, if the electronic device 100 has previously obtained the installation information of the "First hotel" distribution application, and has locally installed the "First hotel" distribution application, after the electronic device 100 receives the input operation (for example, a tap) performed by the user on the control 713, the electronic device 100 obtains, based on the installation information that is of the "First hotel" distribution application and that is locally stored, the full application (for example, the application 1) corresponding to the distribution application.

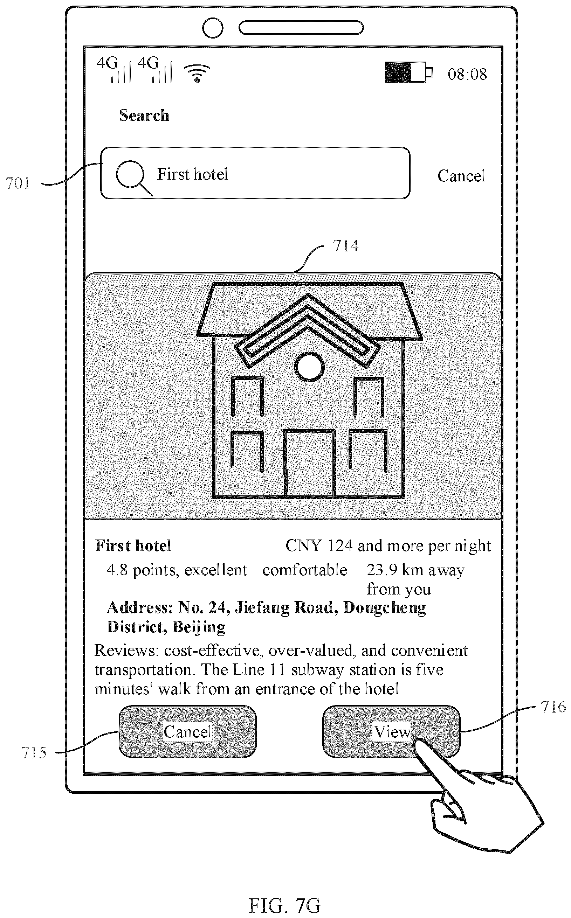

In some embodiments, the electronic device 100 receives the keyword "First hotel" entered by the user in the search bar 701 of the application store. In response to the keyword entered by the user, the electronic device 100 may not display a user interface shown in FIG. 7F, but directly display a user interface 714 shown in FIG. 7G. The electronic device 100 receives the keyword "First hotel" entered by the user in the search bar 701 of the application store. In response to the keyword entered by the user, the electronic device 100 sends the keyword "First hotel" to the server. Based on the keyword "First hotel", the server searches for the distribution application corresponding to the keyword "First hotel". If the distribution application is found, the installation information of the "First hotel" distribution application is sent to the electronic device 100. The electronic device 100 locally installs the "First hotel" distribution application, and obtains, based on the installation information of the distribution application, the full application (for example, the application 1) corresponding to the distribution application. If the electronic device 100 has previously obtained the installation information of the "First hotel" distribution application, and has locally installed the "First hotel" distribution application, after the electronic device 100 receives the keyword "First hotel" entered by the user in the search bar 701 of the application store, the electronic device 100 obtains, based on the installation information that is of the "First hotel" distribution application and that is locally stored, the full application (for example, the application 1) corresponding to the distribution application.

Then, as shown in FIG. 7F, in response to the input operation (for example, a tap) performed by the user on the control 713, the electronic device 100 displays the user interface 714 shown in FIG. 7G. The user interface 714 displays a preview interface of the "First hotel" distribution application, and the preview interface includes profile information of "First hotel". In this way, when the application 1 is not started, the user can first preview an interface related to a keyword entered by the user. The profile information of "First hotel" includes a score of "First hotel" (4.8 points, excellent, comfortable, and 23.9 km away from you), a room price of "First hotel" (for example, CNY 124 and more), an address of "First hotel" (for example, an address: No. 24, Jiefang Road, Dongcheng District, Beijing), and reviews of "First hotel" (for example, cost-effective, over-valued, and convenient transportation. The Line 11 subway station is five minutes' walk from the hotel entrance).

The user interface 714 further includes a control 715 and a control 716. The electronic device 100 may receive an input operation (for example, a tap) performed by the user on the control 715. In response to the input operation of the user, the electronic device 100 displays a user interface shown in FIG. 7F or FIG. 1B, to be specific, after the user previews the profile information of "First hotel", if the user does not want to continue to purchase a ticket of "First hotel", the user may stop, through an operation of triggering the control 715, starting the full application (namely, the application 1) of the "First hotel" distribution application.

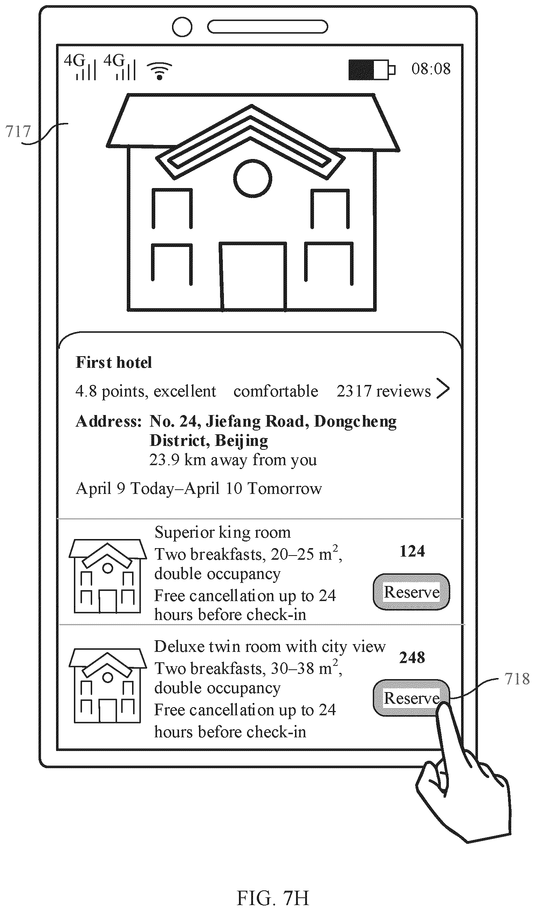

Alternatively, the electronic device 100 may receive an input operation (for example, a tap) performed by the user on the control 716. In response to the input operation of the user, the electronic device 100 starts the application 1 and displays a user interface 717, shown in FIG. 7H, of the application 1, where the user interface 717 is a room reservation interface that is of "First hotel" and that is displayed in the application 1. Compared with the user interface 717, the user interface 714 displays only a part of the profile information of "First hotel". The profile information, displayed on the user interface 717, of "First hotel" is richer than the profile information, displayed on the user interface 714, of "First hotel". In addition, the user can complete some service operations (for example, a room reservation operation) on the user interface 717, but the user interface 714 displays only profile information of "First hotel" and cannot receive some service operations completed by the user on the user interface 714.

The user interface 717 includes the profile information of "First hotel", for example, the score of the scenic spot "First hotel" (4.8 points, excellent and comfortable), the address of "First hotel" (for example, an address: No. 24, Jiefang Road, Dongcheng District, Beijing), and a current distance from "First hotel" to the user (for example, 23.9 km away from you). The electronic device 100 may also receive a user operation to view more comments of "First hotel". The user interface 717 further displays room information. For example, information about a superior king room includes: two breakfasts, 20-25 m², double occupancy, free cancellation up to 24 hours before check-in, and a room price of CNY 124. Information about a deluxe twin room with city view includes: two breakfasts, 30-38.2 m², double occupancy, free cancellation up to 24 hours before check-in, and a room price of CNY 248.

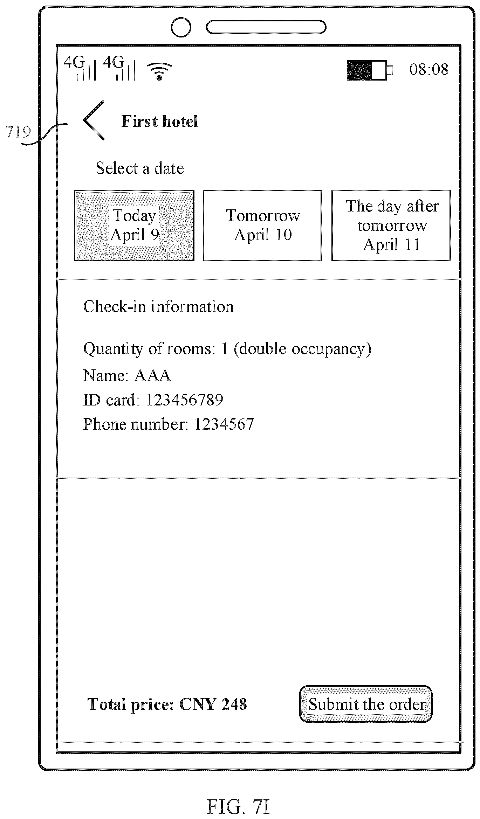

As shown in FIG. 7H, the electronic device 100 receives an input operation (for example, a tap) performed by the user on a control 718. In response to the input operation of the user, the electronic device 100 displays a user interface 719 shown in FIG. 7I. The user interface 719 is an order payment interface. The user interface 719 includes a payment control and order information, for example, a ticket purchase date (for example, April 9), check-in information (for example, a quantity of rooms: one room (double occupancy), a name is AAA, an ID card is 123456789, and a phone number is 1234567), and a total price of CNY 248. In this way, the user can complete a room reservation service operation on the order payment interface provided by the application 1.

It can be learned from the user interfaces shown in FIG. 7A to FIG. 7E and FIG. 7F to FIG. 7I that the electronic device 100 may display interfaces of different distribution application when the user enters different keywords. In this way, the electronic device 100 can first display an interface that is of a distribution application and that corresponds to a keyword entered by the user, and preview, on the interface of the distribution application, content corresponding to the keyword searched for by the user. If the user determines, after previewing the content corresponding to the searched keyword, to perform some service operations, the electronic device 100 may receive an operation performed by the user to start a full application corresponding to the distribution application, and complete the service operation in the full application.

Optionally, a distribution application of the application 1 does not need to be locally installed either; to be specific, the distribution application of the application 1 has no installation package, and the electronic device 100 does not need to download an installation package of the distribution application of the application 1. When the electronic device 100 receives a user operation to enter a search keyword (for example, the first keyword) of the distribution application of the application 1, the electronic device 100 may display the interface of the distribution application of the application 1 in a form of a web page. That is, the electronic device 100 may find the interface of the distribution application of the application 1 from a web browser based on the first keyword, and display the interface of the distribution application of the application 1.

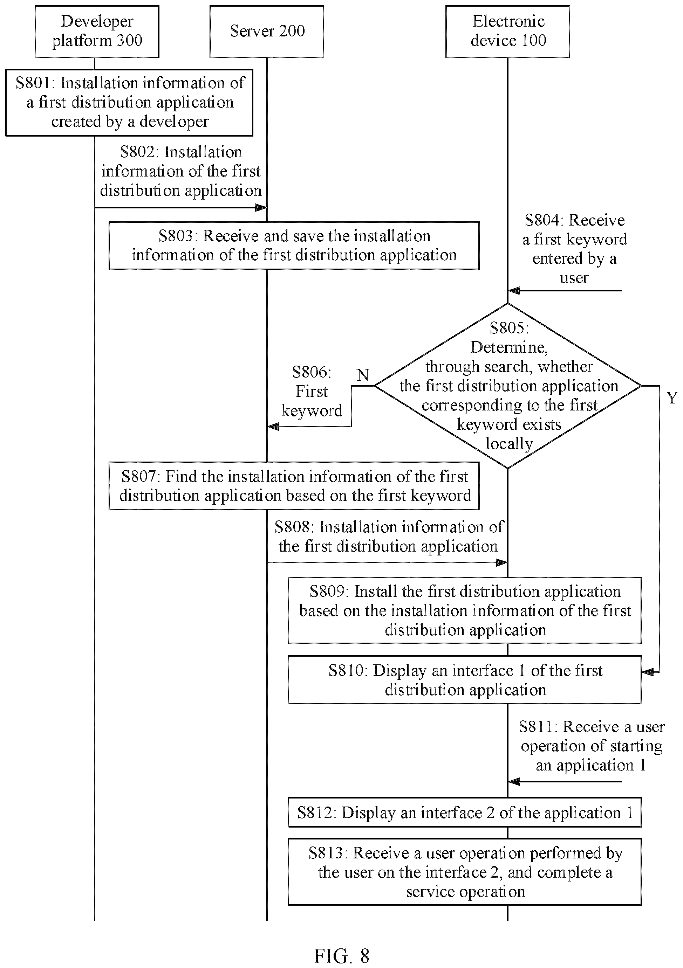

FIG. 8 is an example schematic flowchart of an application starting method according to an embodiment of this application.

S801: Installation information of a first distribution application created by a developer on a developer platform 300.

The first distribution application is a distribution application, an application 1 is a full application, and the first distribution application is a distribution application of the application 1.

The installation information of the first distribution application includes an installation package of the first distribution application, description information of the first distribution application, an association relationship between the first distribution application and the application 1, and the like. The description information of the distribution application of the application 1 includes but is not limited to: a keyword of the first distribution application, a type of the first distribution application, interface description information of the first distribution application, and the like. The interface description information of the first distribution application includes content displayed on an interface, a display location of the content displayed on the interface, and the like. The association relationship between the first distribution application and the application 1 may be an association relationship between the keyword of the first distribution application and a keyword of the application 1.

In some embodiments, the keyword of the first distribution application may be a name of the distribution application. The keyword of the application 1 may also be a name of the application 1.

In some embodiments, there may be a plurality of keywords of the application 1 or a plurality of keywords of the first distribution application. That is, an electronic device 100 may find the application 1 based on a plurality of different keywords, or find the first distribution application based on a plurality of different keywords.

It should be noted that the application 1 may be associated with a plurality of different distribution applications. For example, the application 1 is associated with the first distribution application, a second distribution application, and the like.

S802: The developer platform 300 sends the installation information of the first distribution application to a server 200.

S803: The server 200 receives and saves the installation information of the first distribution application.

It should be noted that, in some embodiments, the developer platform 300 and the server 200 may be a same device, for example, a same server.

S804: The electronic device 100 receives a first keyword entered by a user.

The first keyword is used to search for some functional interfaces in the application 1, for example, a scenic spot ticket purchase interface and a hotel reservation interface. The electronic device 100 may present, through the distribution application, the some functional interfaces, corresponding to the first keyword, in the application 1. In this way, compared with the application 1, the distribution application is used to display only the some functional interfaces in the application 1, so that the installation package of the distribution application is small and memory space occupied by the electronic device 100 is also small. The electronic device 100 can still browse, through the distribution application without downloading the application 1, the some functional interfaces, corresponding to the first keyword, in the application 1.

For example, the electronic device 100 starts the first distribution application of the application 1 and displays an interface 1 of the application 1 based on the first keyword entered by the user, where the interface 1 is the scenic spot ticket purchase interface in the application 1. Alternatively, the electronic device 100 starts a second distribution application of the application 1 and displays an interface 2 of the application 1 based on a second keyword entered by the user, where the interface 2 is the hotel reservation interface in the application 1.

S805: The electronic device 100 determines, through search, whether the first distribution application corresponding to the first keyword exists locally.

The electronic device 100 determines, based on the first keyword through search, whether the first distribution application exists locally. If the first distribution application does not exist locally, the electronic device 100 performs S806. If the first distribution application exists locally, the electronic device 100 performs S810.

S806: The electronic device 100 sends the first keyword to the server 200.

S807: The server 200 finds the installation information of the first distribution application based on the first keyword.

In some embodiments, if the server 200 does not locally find the installation information of the first distribution application, the server 200 may send first information to the electronic device 100, where the first information is used to notify the electronic device 100 that the server does not find the installation information of the first distribution application. Optionally, after the electronic device 100 receives the first information, the electronic device 100 outputs prompt information, where the prompt information indicates to the user that the first distribution application does not exist currently, so that the user is allowed to enter another keyword or the electronic device 100 recommends another similar distribution application to the user.

In some embodiments, if the server 200 does not locally find the installation information of the first distribution application, the server 200 may send second information to the developer platform 300, where the second information indicates the developer platform 300 to send the installation information of the first distribution application to the server 200 as soon as possible.

In some embodiments, after the server 200 receives the installation information, sent by the developer platform 300, of the first distribution application, the server 200 may send third information to the electronic device 100, where the third information is used to notify the electronic device 100 that the installation information of the first distribution application already exists in the server. Optionally, after the electronic device 100 receives the second message, the electronic device 100 outputs prompt information, where the prompt information indicates to the user that the first distribution application already exists currently, so that the user may enter the first keyword to find the first distribution application.

S808: The server 200 sends the installation information of the first distribution application to the electronic device 100.

S809: The electronic device 100 locally installs the first distribution application based on the installation information of the first distribution application.

S810: The electronic device 100 displays an interface 1 of the first distribution application.

The interface 1 is a functional interface, corresponding to the first keyword, in the application 1. In this way, the electronic device 100 can first preview an interface of the application 1 through the interface 1 provided by the first distribution application. After the user previews the interface 1, by receiving a user operation, the electronic device 100 may start the application 1 and complete a service operation on the interface provided by the application 1.

S811: The electronic device 100 receives a user operation of starting the application 1.

The user operation of starting the application 1 may be a trigger operation on the interface 1.

S812: The electronic device 100 starts the application 1, and displays the interface 2 of the application 1.

That the electronic device 100 starts the application 1, and displays the interface 2 of the application 1 specifically includes: the electronic device determines a user identifier of the application 1 and an address of the interface 2. The electronic device displays the interface 2 of the application 1 based on the user identifier of the application 1 and the address of the interface 2.

Both the interface 2 and the interface 1 are functional interfaces corresponding to the first keyword, but content displayed on the interface 2 is richer than content displayed on the interface 1.

S813: The electronic device 100 receives a user operation performed by the user on the interface 2, and completes the service operation.

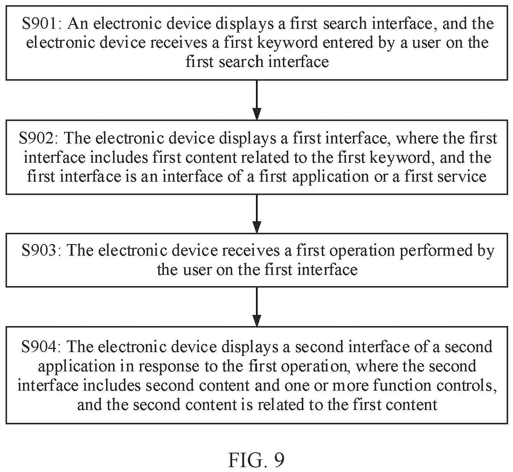

FIG. 9 is a schematic flowchart of an interface display method according to an embodiment of this application.

S901: An electronic device displays a first search interface, and the electronic device receives a first keyword entered by a user on the first search interface.

The first search interface may be a search interface of an application store, for example, an interface 302 shown in FIG. 1B, or may be a global search interface, or may be a service center search interface.

The first keyword may be "First museum" shown in FIG. 7A.

S902: The electronic device displays a first interface, where the first interface includes first content related to the first keyword, and the first interface is an interface of a first application or a first service.

The first application or the first service may be the first distribution application described in the foregoing embodiment.

The first content may be description information related to the first keyword, for example, a name of the first keyword, location information of the first keyword, price information of the first content, or comment information of the first content.

The first application or the first service may be a distribution application or a distribution service, and the second application may be a full application.

The first interface may be a user interface 705 shown in FIG. 7B.

The first content may be a text, an icon, or the like that is displayed on the user interface 705. For example, the first content may be profile information of "First museum". The profile information of "First museum" includes a quantity of views of the scenic spot "First museum" (for example, 6268577 person-times), a score of the scenic spot "First museum" (4.8 points), a ticket price of the scenic spot "First museum" (for example, CNY 68.21 and more), a rating of the scenic spot "First museum" (for example, a 6A scenic spot), a distance from the scenic spot "First museum" to the user (for example, 23.9 km), opening hours of the scenic spot "First museum" (for example, 8:00 a.m. to 5:30 p.m.), and brief introduction to the scenic spot "First museum" (for example, the First museum was established on October 10, 1925, and the collections include but are not limited to items related to the Imperial Palace of the Ming Dynasty and the Imperial Palace of the Qing Dynasty).

S903: The electronic device receives a first operation performed by the user on the first interface.

The first operation may be an input operation (for example, a tap) for a control 707 shown in FIG. 7B.

S904: The electronic device displays a second interface of the second application in response to the first operation, where the second interface includes second content and one or more function controls, and the second content is related to the first content.

The second application may be the application 1 described in the foregoing embodiment.

The second content may also be the description information related to the first keyword, for example, the name of the first keyword, the location information of the first keyword, the price information of the first content, or the comment information of the first content. The second content may include the first content, or a part of the second content may be the same as a part of the first content.

The second interface may be a user interface 708 shown in FIG. 7C, a user interface 710 shown in FIG. 7D, or a user interface 711 shown in FIG. 7E.

The second content may be a text, an icon, or the like that is displayed on the user interface 708. Alternatively, the second content may be a text, an icon, or the like that is displayed on the user interface 710. The second content may be a text, an icon, or the like that is displayed on the user interface 711.

The one or more function controls may be a control 709 displayed on the user interface 708. Alternatively, the one or more function controls may be a "Reserve" control that is displayed on the user interface 710 and tapped by the user. The one or more function controls may alternatively be a "Submit the order" control displayed on the user interface 711.

According to the method, before the electronic device displays an interface of the second application, the electronic device can first display, by using the first application or the first service, an interface searched for by the user. After the user determines to perform some service operations, the electronic device displays the interface searched for by the user in the second application, to preview an interface associated with a keyword entered by the user, without downloading the second application. In addition, one application can have a plurality of different distribution entries, so that one full application has a plurality of different starting manners.

In a possible implementation, the first application is an application associated with the second application, or the first service is a service associated with the second application.

Optionally, when a developer develops the first application or the first service, and the second application, the developer establishes an association relationship between the first application and the second application, or the developer establishes an association relationship between the first service and the second application.

In a possible implementation, that the first application is an application associated with the second application, or the first service is a service associated with the second application specifically includes: an application identifier of the first application is associated with an application identifier of the second application, or a service identifier of the first service is associated with an application identifier of the second application.

That the application identifier of the first application is associated with the application identifier of the second application, or the service identifier of the first service is associated with the application identifier of the second application means that a binding relationship is established between the first application and the second application, or a binding relationship is established between the first service and the second application. The electronic device can match the second application based on the application identifier of the first application, or match the second application based on the service identifier of the first service.

Optionally, the application identifier of the first application and the application identifier of the second application may be the same or may be different.

The application identifier of the application includes but is not limited to: an installation package name of the application, signature information of the application, and the like.

In a possible implementation, that the electronic device displays a second interface of the second application in response to the first operation specifically includes: The electronic device determines the application identifier of the second application and an address of the second interface in response to the first operation; and the electronic device displays the second interface based on the application identifier of the second application and the address of the second interface.

Optionally, an installation package of the first application or the first service includes the application identifier of the second application and the address of the second interface, and the electronic device may determine the application identifier of the second application and the address of the second interface from the installation package of the first application or the first service. When developing the installation package of the first application or the first service, the developer may configure the application identifier of the second application and the address of the second interface in the installation package of the first application or the first service.

For example, the address of the second interface may be a link of the second interface, for example, a deeplink (deeplink).

In a possible implementation, if the second application is not installed on the electronic device, before the electronic device displays a second interface of a second application, the method further includes: In response to the first operation, the electronic device downloads the second application from an application server, and installs the second application.

In another possible implementation, the electronic device may display a download interface of the second application.

In another possible implementation, after the electronic device downloads and installs the second application, the electronic device may automatically display the second interface based on the application identifier of the second application and the address of the second interface without receiving a user operation.

In a possible implementation, an installation package file of the second application is larger than an installation package file of the first application or the first service. For example, the installation package file of the first application is about 1 M, and the installation package file of the first application is greater than 10 M, for example, 50 M to 100 M.

In a possible implementation, the second application and the first application or the first service are developed by a same developer.

In a possible implementation, a third application is further associated with the second application, or a second service is associated with the second application. The method further includes: The electronic device receives a second keyword entered by the user on the first search interface. The electronic device displays a third interface, where the third interface includes third content related to the second keyword, and the third interface is an interface of the third application or the second service. The electronic device receives a second operation performed by the user on the third interface. The electronic device displays a fourth interface of the second application in response to the second operation, where the fourth interface includes fourth content and one or more function controls, and the fourth content is related to the third content. In this way, one second application may be associated with both the first application and the third application. That is, one full application may be associated with a plurality of distribution applications, so that the one full application has a plurality of different distribution entries.

The second keyword may be "First hotel" shown in FIG. 7F.

The third content may be description information related to the second keyword, for example, a name of the second keyword, location information of the second keyword, price information of the second keyword, or comment information of the second keyword.

The third application or the second service may be a distribution application or a distribution service, and the second application may be a full application.

The third interface may be a user interface 714 shown in FIG. 7G.

The third content may be a text, an icon, or the like that is displayed on the user interface 714. For example, the third content may be profile information of "First hotel". The profile information of "First hotel" includes a score of "First hotel" (4.8 points, excellent, comfortable, and 23.9 km away from you), a room price of "First hotel" (for example, CNY 124 and more), an address of "First hotel" (for example, an address: No. 24, Jiefang Road, Dongcheng District, Beijing), and reviews of "First hotel" (for example, cost-effective, over-valued, and convenient transportation. The Line 11 subway station is five minutes' walk from the hotel entrance).

The second operation may be an input operation (for example, a tap) for a control 716 shown in FIG. 7G.

The fourth content may also be the description information related to the second keyword, for example, the name of the second keyword, the location information of the second keyword, the price information of the second keyword, or the comment information of the second keyword. The fourth content may include the third content, or a part of the fourth content may be the same as a part of the third content.

The fourth interface may be a user interface 717 shown in FIG. 7H, and the second interface may be a user interface 719 shown in FIG. 7I.

The fourth content may be a text, an icon, or the like that is displayed on the user interface 717. Alternatively, the fourth content may be a text, an icon, or the like that is displayed on the user interface 719.

The one or more function controls may be a control 718 displayed on the user interface 717. The one or more function controls may alternatively be a "Submit the order" control displayed on the user interface 719.

In a possible implementation, the one or more function controls include a first control. After the electronic device displays a second interface of a second application, the method further includes: The electronic device receives a third operation performed by the user on the first control; and the electronic device completes a first task item in response to the third operation. The first task item includes but is not limited to: a ticket purchase task item, a hotel reservation task item, a meal reservation task item, and the like.

The first control may be a control 709 displayed on the user interface 708. Alternatively, the one or more function controls may be a "Reserve" control that is displayed on the user interface 710 and tapped by the user. The one or more function controls may alternatively be a "Submit the order" control displayed on the user interface 711.

In a possible implementation, before the electronic device displays a first interface, the method further includes: The electronic device displays a fifth interface. That the electronic device displays a first interface specifically includes: The electronic device receives a fourth operation for the fifth interface; and the electronic device displays the first interface in response to the fourth operation. That is, the electronic device may directly accept an operation performed by the user on the fifth interface, and display the first interface.

In another possible implementation, the fifth interface further includes a second control. The electronic device accepts an input operation performed by the user on the second control on the fifth interface, and displays the first interface.

The fifth interface may be a user interface displayed in FIG. 7A.

The second control may be a control 704 on the user interface displayed in FIG. 7A.

In a possible implementation, that the electronic device displays the first interface in response to the fourth operation specifically includes: In response to the fourth operation, the electronic device downloads and installs the first application or the first service; and the electronic device displays the first interface of the first application or the first service. That is, the electronic device downloads and installs the first application or the first service only when the user searches for the first application or the first service.

In a possible implementation, before the electronic device receives a first keyword entered by a user on the first search interface, the method further includes: When downloading and installing the second application, the electronic device downloads and installs the first application or the first service. That is, when downloading and installing the second application, the electronic device downloads and locally installs the first application or the first service.

In a possible implementation, after the electronic device downloads and installs the first application, the method further includes: The electronic device receives and responds to a user operation, and displays a service management interface, where the service management interface includes a setting item of the first application or the first service.

The service management interface may be a user interface 503 shown in FIG. 5D.

The setting item of the first application or the first service may be a setting item of the first distribution application on the user interface 503 shown in FIG. 5D.

In a possible implementation, the method further includes: The electronic device receives a fifth operation for the displayed service management interface; and in response to the fifth operation, the electronic device deletes the first application or the first service, and stops displaying the setting item of the first application or the first service on the displayed service management interface. In this way, the user can actively delete the first application or the first service, to release storage space of the electronic device.

The fifth operation may be an operation of deleting the first distribution application shown in FIG. 6A to FIG. 6C.

In a possible implementation, the method further includes: The electronic device outputs first prompt information, where the first prompt information indicates, to the user, whether to download a fourth application or a third service; and the fourth application is an application associated with the second application, or the third service is a service associated with the second application. In this way, when there is a new distribution application, the electronic device can indicate, to the user, whether to install the new distribution application, so as to respect a willingness of the user.

In a possible implementation, when outputting the first prompt information, the electronic device further outputs a third control and a fourth control. The electronic device receives an operation performed by the user on the third control, and determines to download and install the fourth application or the third service. Alternatively, the electronic device may receive an operation performed by the user on the fourth control, and refuse to download and install the fourth application or the third service.

The first prompt information may be prompt information 510 shown in FIG. 5E.

In a possible implementation, the method further includes: The electronic device outputs second prompt information, where the second prompt information indicates, to the user, that the first application or the first service has not been used within a first time period, and indicates, to the user, whether to delete the first application or the first service. In this way, the electronic device can actively monitor the first application or the first service that is not used by the user for a long time, and indicate the user to delete the first application or the first service that is not used for a long time.

The second prompt information may be prompt information 513 shown in FIG. 5F.

An embodiment of this application further provides an electronic device, where the electronic device includes one or more processors and one or more memories, the one or more memories are coupled to the one or more processors, the one or more memories are configured to store computer program code, the computer program code includes computer instructions, and the one or more processors invoke the computer instructions, to enable the electronic device to perform an interface display method shown in FIG. 9.

An embodiment of this application further provides a computer-readable storage medium, where the computer-readable storage medium stores instructions, and when the instructions are run on an electronic device, the electronic device is enabled to perform an interface display method shown in FIG. 9.

An embodiment of this application further provides a computer program product, where when the computer program product is executed by an electronic device, the electronic device is enabled to perform an interface display method shown in FIG. 9.

The implementations of this application may be randomly combined to achieve different technical effects.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions in this application are generated. The computer may be a general-purpose computer, a dedicated computer, a computer network, or another programmable apparatus. The computer instructions may be stored in the computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid state disk (solid state disk, SSD)), or the like.

A person of ordinary skill in the art may understand that all or some of the procedures of the methods in the embodiments may be implemented by a computer program instructing related hardware. The program may be stored in the computer-readable storage medium. When the program is executed, the procedures in the method embodiments may be included. The storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. An interface display method, wherein the method comprises:
displaying, by an electronic device, a first search interface;
receiving, by the electronic device, a first keyword entered by a user on the first search interface;
displaying, by the electronic device, a first interface, wherein the first interface comprises first content related to the first keyword, and the first interface is an interface of a first application or a first service;
receiving, by the electronic device, a first operation performed by the user on the first interface; and
displaying, by the electronic device, a second interface of a second application in response to the first operation, wherein the second interface comprises second content and one or more function controls, and the second content is related to the first content.

2. The method according to claim 1, wherein the first application is an application associated with the second application, or the first service is a service associated with the second application.

3. The method according to claim 2, wherein that the first application is an application associated with the second application, or the first service is a service associated with the second application specifically comprises:
an application identifier of the first application is associated with an application identifier of the second application, or a service identifier of the first service is associated with an application identifier of the second application.

4. The method according to any one of claims 1 to 3, wherein the displaying, by the electronic device, a second interface of a second application in response to the first operation specifically comprises:
determining, by the electronic device, the application identifier of the second application and an address of the second interface in response to the first operation; and
displaying, by the electronic device, the second interface based on the application identifier of the second application and the address of the second interface.

5. The method according to any one of claims 1 to 4, wherein if the second application is not installed on the electronic device, before the displaying, by the electronic device, a second interface of a second application, the method further comprises:
in response to the first operation, downloading, by the electronic device, the second application from an application server, and installing the second application.

6. The method according to any one of claims 1 to 5, wherein an installation package file of the second application is larger than an installation package file of the first application or the first service.

7. The method according to any one of claims 1 to 6, wherein the second application and the first application or the first service are developed by a same developer.

8. The method according to any one of claims 1 to 7, wherein a third application is further associated with the second application, or a second service is associated with the second application; and the method further comprises:
receiving, by the electronic device, a second keyword entered by the user on the first search interface;
displaying, by the electronic device, a third interface, wherein the third interface comprises third content related to the second keyword, and the third interface is an interface of the third application or the second service;
receiving, by the electronic device, a second operation performed by the user on the third interface; and
displaying, by the electronic device, a fourth interface of the second application in response to the second operation, wherein the fourth interface comprises fourth content and one or more function controls, and the fourth content is related to the third content.

9. The method according to any one of claims 1 to 8, wherein the one or more function controls comprise a first control; and after the displaying, by the electronic device, a second interface of a second application, the method further comprises:
receiving, by the electronic device, a third operation performed by the user on the first control; and
completing, by the electronic device, a first task item in response to the third operation.

10. The method according to any one of claims 1 to 9, wherein before the displaying, by the electronic device, a first interface, the method further comprises:
displaying, by the electronic device, a fifth interface; and
the displaying, by the electronic device, a first interface specifically comprises:
receiving, by the electronic device, a fourth operation for the fifth interface; and
displaying, by the electronic device, the first interface in response to the fourth operation.

11. The method according to claim 10, wherein the displaying, by the electronic device, the first interface in response to the fourth operation specifically comprises:
in response to the fourth operation, downloading and installing, by the electronic device, the first application or the first service; and
displaying, by the electronic device, the first interface of the first application or the first service.

12. The method according to any one of claims 1 to 11, wherein before the receiving, by the electronic device, a first keyword entered by a user on the first search interface, the method further comprises:
when downloading and installing the second application, downloading and installing, by the electronic device, the first application or the first service.

13. The method according to claim 11 or 12, wherein after the downloading and installing, by the electronic device, the first application, the method further comprises:
receiving and responding to, by the electronic device, a user operation, and displaying a service management interface, wherein the service management interface comprises a setting item of the first application or the first service.

14. The method according to claim 13, wherein the method further comprises:
receiving, by the electronic device, a fifth operation for the displayed service management interface; and
in response to the fifth operation, deleting, by the electronic device, the first application or the first service, and stopping displaying the setting item of the first application or the first service on the displayed service management interface.

15. The method according to any one of claims 1 to 14, wherein the method further comprises:
outputting, by the electronic device, first prompt information, wherein the first prompt information indicates, to the user, whether to download a fourth application or a third service; and the fourth application is an application associated with the second application, or the third service is a service associated with the second application.

16. The method according to any one of claims 1 to 15, wherein the method further comprises:
outputting, by the electronic device, second prompt information, wherein the second prompt information indicates, to the user, that the first application or the first service has not been used within a first time period, and indicates, to the user, whether to delete the first application or the first service.

17. An electronic device, wherein the electronic device comprises one or more processors and one or more memories, the one or more memories are coupled to the one or more processors, the one or more memories are configured to store computer program code, the computer program code comprises computer instructions, and the one or more processors invoke the computer instructions, to enable the electronic device to perform the method according to any one of claims 1 to 16.

18. A computer-readable storage medium, wherein the computer-readable storage medium stores instructions, and when the instructions are run on an electronic device, the electronic device is enabled to perform the method according to any one of claims 1 to 16.

19. A computer program product, wherein when the computer program product is executed by an electronic device, the electronic device is enabled to perform the method according to any one of claims 1 to 16.
